Europäisches Patentamt

European Patent Office

Office européen des brevets

(19)

(11) **EP 1 290 404 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.⁷: **G01B 7/34**, G01N 27/416, G12B 21/02

(21) Anmeldenummer: **01940013.4**

(22) Anmeldetag: **11.06.2001**

(86) Internationale Anmeldenummer:
**PCT/AT2001/000192**

(87) Internationale Veröffentlichungsnummer:
**WO 2001/094877 (13.12.2001 Gazette 2001/50)**

(54) **PROBE FÜR DIE GLEICHZEITIGE DURCHFÜHRUNG EINER ELEKTROCHEMISCHEN UND EINER TOPOGRAPHISCHEN NAHFELD-MIKROSKOPIE**

SAMPLE FOR SIMULTANEOUSLY CONDUCTING ELECTRO-CHEMICAL AND TOPOGRAPHIC NEAR-FIELD MICROSCOPY

ECHANTILLON PERMETTANT D'EFFECTUER SIMULTANEMENT LA MICROSCOPIE A CHAMP PROCHE ELECTROCHIMIQUE ET TOPOGRAPHIQUE

(84) Benannte Vertragsstaaten:
**AT BE CH CY DE DK ES FI FR GB GR IE IT LI LU MC NL PT SE TR**

(30) Priorität: **09.06.2000 AT 10122000**

(43) Veröffentlichungstag der Anmeldung:
**12.03.2003 Patentblatt 2003/11**

(73) Patentinhaber:
 • **Kranz, Christine**
  **1060 Wien (AT)**
 • **Mizaikoff, Boris**
  **1060 Wien (AT)**
 • **Lugstein, Alois**
  **1060 Wien (AT)**
 • **Bertagnolli, Emmerich**
  **1060 Wien (AT)**
 • **Austria Wirtschaftsservice Gesellschaft mit beschränkter Haftung**
  **1030 Wien (AT)**

(72) Erfinder:
 • **KRANZ, Christine, Inst für Analytische Chemie**
  **A-1060 Wien (AT)**

 • **MIZAIKOFF, Boris, Inst für Analytische Chemie**
  **A-1060 Wien (AT)**
 • **LUGSTEIN, Alois, Inst für Festkörperelektronik**
  **A-1060 Wien (AT)**
 • **BERTAGNOLLI, Emmerich,**
  **Inst Festkörperelektronik**
  **A-1060 Wien (AT)**

(74) Vertreter: **Alge, Daniel, Mag. Dr. rer.nat. et al**
 **Sonn & Partner Patentanwälte**
 **Riemergasse 14**
 **1010 Wien (AT)**

(56) Entgegenhaltungen:
 **EP-A- 0 318 289      EP-A- 0 539 731**
 **DE-A- 3 916 047      DE-C- 19 636 582**
 **US-A- 5 166 520      US-A- 6 002 131**
 **US-A- 6 027 951**

 • **J.V.MACPHERSON ET AL.: "In-Situ Imaging of Ionic Cristal Dissolution Using an Integrated Electrochemical/AFM Probe" J. AM. CHEM. SOC., Bd. 118, 1996, Seiten 6445-6452, XP001008882 in der Anmeldung erwähnt**

**Beschreibung**

Die vorliegende Erfindung betrifft eine Vorrichtung für die gleichzeitige Durchführung einer elektrochemischen und einer topographischen Nahfeld-Mikroskopie. Sie betrifft auch ein entsprechendes Verfahren und ein Nahfeld-Mikroskop (Ansprüche 1, 8, 9).

Die Nutzung von Ultramikroelektroden zur lateral aufgelösten Charakterisierung von Probenoberflächen liefert quantitative bzw. semiquantitative Aussagen über Größen wie Oberflächenaktivität/Oberflächenreaktivität, über die Kinetik von heterogenen sowie homogenen Elektronentransferreaktionen, über Korrosionsprozesse, über die Aktivität biologischer Komponenten und Systeme (z.B. die Quantifizierung von Enzymaktivitäten, die Untersuchung von Stofftransportphänomenen an Membranen, Geweben und Gewebsteilen, Stoffwechselaktivitäten von Einzelzellen, Zellgruppen und Zellhaufen, sowie von Organteilen und Organen) und kann ebenfalls auf das weite Gebiet der lateral aufgelösten Oberflächenmodifikation mittels Ätzens (Abtragen von Material) oder Abscheidens (Auftragen von Material) angewendet werden.

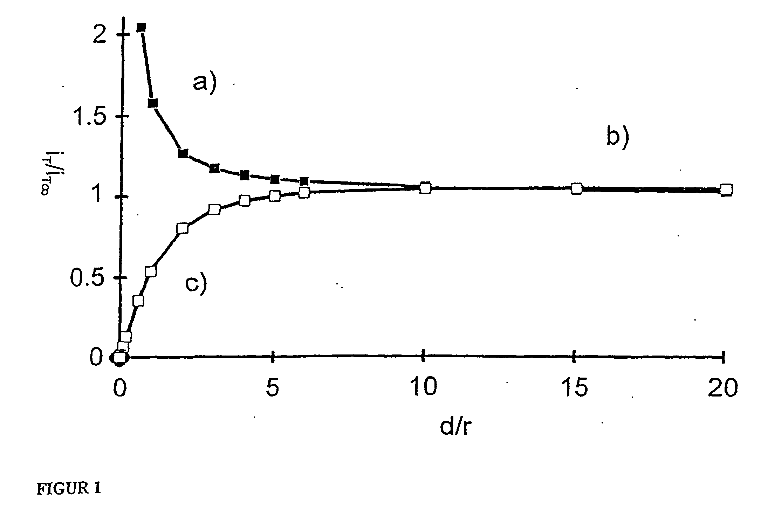

Voraussetzung hierfür ist jedoch eine exakte, reproduzierbare Abstandkontrolle zwischen Ultramikroelektrode und Probe im Bereich einiger Elektrodenradien. Durch die Umsetzung der gelösten redoxaktiven Substanz an der Mikroelektrode stellt sich durch die hemisphärische Diffusion zur Mikroelektrode ein diffusionskontrollierter Strom ein (Fig. 1 (b)). Nähert man die Mikroelektrode im Bereich einiger Elektrodenradien an die Probenoberfläche an, so wird das Diffusionsfeld gestört. Ist die Probenoberfläche zum Beispiel leitend oder chemisch aktiv, so kann die redoxaktive Substanz an der Probenoberfläche rezyklisiert werden, wodurch ein Anstieg des Faraday'schen Stromes erfolgt (Fig. 1 (a)). Nähert man die Mikroelektrode im Bereich einiger Elektrodenradien an eine zum Beispiel nicht leitende oder chemisch inerte Probenoberfläche an, so blockiert diese die Diffusion zur Mikroelektrode und dies resultiert in einem verringerten Faraday'schen Strom (Fig, 1 (c)). Diese probenbedingte Störung des Diffusionsfeldes kann theoretisch über Diffusionsgleichungen beschrieben werden. Die numerische Lösung dieser Differentialgleichungen liefert folgende Näherung (vgl. Mirkin et al., J. Electroanal. Chem., 328 (1992), 47-62):

$$\text{Leiter: } i_T(L)/i_{T\,W} = 0{,}68 + 0{,}78377/L + 0{,}3315\exp(-1{,}0672/L)$$

$$\text{Isolator: } i_T(L)/i_{T\,W} = 1/[0{,}292 + 1{,}5151/I + 0{,}6553\exp(-2{,}4035/L)]$$

$$L = d/r \hspace{4cm} \text{(Gleichung 1)}$$

mit: d: Abstand zwischen Elektrode und Probe und r: Radius der Mikroelektrode.

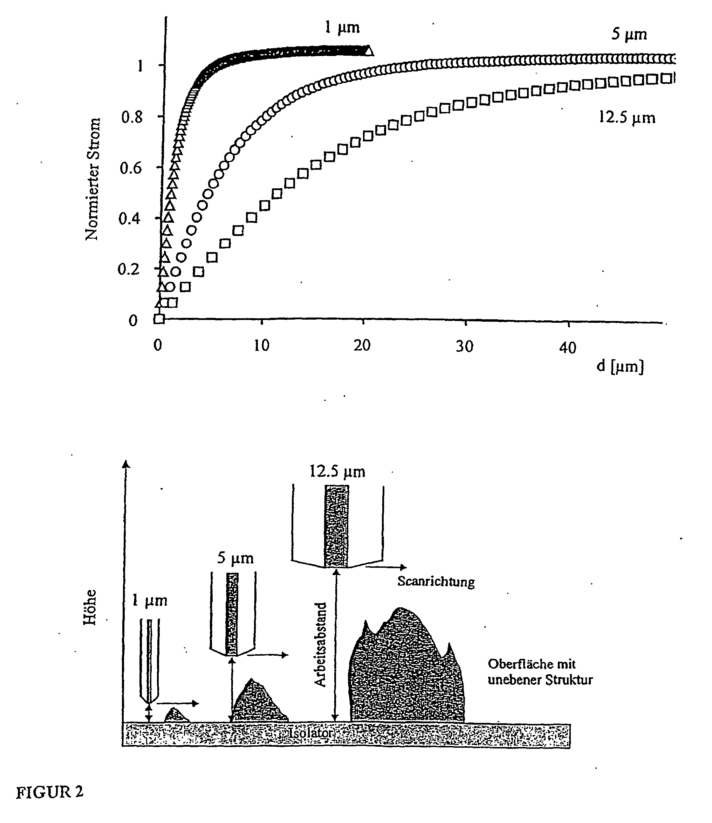

Demnach ist zur Verbesserung der Sensitivität und des dynamischen Bereiches ein relativ geringer Arbeitsabstand günstig, der jedoch von den Eigenschaften, wie z.B. der Leitfähigkeit oder chemischen Aktivität, beeinflusst wird. Dies birgt im konstanten Höhenmodus jedoch die Gefahr der Kollision zwischen der Mikroelektrode und der Probe, wenn der Arbeitsabstand zu gering gewählt wird (Fig. 2). Daher ist die Kenntnis und das Konstanthalten des absoluten Arbeitsabstandes wünschenswert.

Bisher wurde in den meisten in der Literatur beschriebenen Anwendungen die an der Mikroelektrode gemessene Änderung des Faraday'schen Stromes im Nahfeldbereich zur Positionierung genutzt (vgl. Bard et al., Science, 254 (1991), 68-74). Dabei wird durch Analyse der Annäherungskurven der Abstand zwischen Probe und Mikroelektrode ermittelt. Da aber im realen Experiment weder von einer idealen Elektrodengeometrie (besonders wenn Elektroden sehr klein werden), noch von einer ideal parallelen Anordnung ausgegangen werden kann, kann der Abstand zwischen Ultramikroelektrode und Oberfläche nur annähernd bestimmt werden.

Da im konventionellen Experiment die Ultramikroelektrode nicht allein den topographischen Gegebenheiten folgt, stellt das erhaltene Bild der Oberfläche eine Überlagerung von Einflüssen, insbesondere der elektrochemischen Aktivität und der Distanz zwischen Probenoberfläche und Sonde auf den gemessenen Faraday'schen Strom an der Ultramikroelektrode dar (Fig. 2).

Bei einem Ultramikroelektrodendurchmesser im Bereich von 1-10 mm und einer planaren Probe stellt dies nur eine bedingte Limitierung der Abbildungsqualität dar. Diese Überlagerungseinflüsse steigen jedoch proportional zu der Abnahme der (elektro)aktiven Sondenfläche. Daher ist eine Abbildung der Oberfläche im konstanten Abstand (constant height mode) nur möglich, wenn die Abstandsänderung (z.B. durch die Topographie der Probe) oder eine Verkippung der Probe den zulässigen Arbeitsabstand nicht übersteigt.

Da eine deutliche Verbesserung der Auflösung nur durch den Einsatz kleinerer Elektroden (< 1 μm Durchmesser) erzielt werden kann, muß eine alternative Abstandskontrolle eingesetzt werden.

Erste Ansätze, um dieses Problem zu lösen, beruhen zum einen auf einer Vertikal-Modulation der Elektrode, um zwischen leitenden Regionen mit Stromanstieg und nicht-leitenden Regionen mit Stromabfall unterscheiden zu können (vgl. Wipf et al., Anal. Chem. 64 (1992), 1362-1367). Durch eine Logikschaltung kann die Mikroelektrode der Topographie nachgeführt werden, jedoch nicht in den Randregionen zwischen leitend und nicht leitend. Zum anderen beruht die Abstandskontrolle auf konvektiven Effekten, die bei schneller Bewegung der Sonde senkrecht zur Oberfläche hin zu Stromänderungen führen (vgl. Borgwarth et al., Ber. Bunsenges. Phys. Chem. 98 (1994), 1317).

Beide Methoden beruhen jedoch weiterhin auf einem stromabhängigen Signal und der Abstand zwischen Sonde und Probe kann nicht exakt aus den Annäherungskurven bestimmt werden.

Demgegenüber konnte eine stromunabhängige Höhenkontrolle, basierend auf der Detektion von Scherkräften (shear force mode), wie sie bereits in der optischen Rasternahfeldmikroskopie eingesetzt wurden, erfolgreich zur Positionierung von Mikroelektroden verwendet werden (Ludwig et al., Rev. Sci. Instr., 66 (1995), 2857-2860). Grundlage der scherkraftbasierenden Höhenkontrolle ist die Anregung der Mikroelektrode zu horizontalen Schwingungen parallel zur Oberfläche mittels eines Piezoelements und die Detektion der Schwingungsdämpfung aufgrund hydrodynamischer Effekte, wenn die Sonde an die Probenoberfläche angenähert wird.

In der US-PS 5,936,237 wird eine Kombination von elektromagnetischer und topographischer Nahfeldmikroskopie beschrieben. Eine elektrochemische Nahfeldmikroskopie ist aber - alleine schon auf Grund der vollkommen unterschiedlichen zugrundeliegenden lokalen Wechselwirkungen und der damit verbundenen konstruktiven Maßnahmen für die elektrochemische Messung einerseits und die elektromagnetische Messung andererseits - mit der dort beschriebenen Vorrichtung nicht möglich.

Ludwig et al. beschrieben eine stromunabhängige Höhenkontrolle, die auf einem optischen Detektionsprinzip beruht. Ein auf die Spitze der Sonde fokussierter Laserstrahl erzeugt ein Fresnel'sches Beugungsmuster, welches an einer geteilten Photodiode detektiert und mit Hilfe einer Lock-in-Technik verstärkt wird.

Neben dem optischen Verfahren können auch mechanische Methoden, basierend auf einer kleinen Stimmgabel aus piezoelektrischem Material, die an der Mikroelektrode befestigt wird, zur Detektion der Schwingung herangezogen werden (James et al., J. Electrochem. Soc., 145 (1998), L64-L66). Bei diesen Ansätzen muß die Schwingungsamplitude an der Spitze.der Sonde so klein gewählt werden, dass das elektrochemische Signal nicht wesentlich verfälscht wird. Diese Bedingung stellt gleichzeitig die wesentliche Limitierung für den Einsatz von Ultramikroelektroden und damit für eine verbesserte laterale Auflösung dar.

Darüber hinaus bringt jede Verkleinerung der Mikroelektrode einen signikant erhöhten experimentellen Aufwand (Fokussieren eines Laserstrahls auf sub-μm-Elektrode, Suchen der Resonanzfrequenz, etc.) mit sich.

Ein weiterer Ansatz zur unabhängigen Topographieerfassung wurde von Macpherson et al. beschrieben (Anal. Chem., 72 (2000), 276-285). Die Grundlage hierfür ist die Herstellung von Mikroelektroden, deren Geometrie und Eigenschaften an einen Cantilever angepasst sind. Ein Platindraht wird über ein dynamisches Verfahren symmetrisch geätzt, so dass eine Spitze entsteht. Der Draht wird im 90°-Winkel gebogen und der vertikale Anteil des Drahtes wird mit Hilfe von Metallplatten flach gepresst. Mit Hilfe eines Elektro-Depositionslacks wird die Mikroelektrode elektrisch isoliert. Der abgeflachte Teil dient aufgrund seiner Elastizität zur Abstandskontrolle, basierend auf der Kraftwechselwirkung zwischen Probe und Sonde im Nahfeldbereich.

Mit derartigen Spitzen konnten unter Zuhilfenahme eines AFM-Gerätes Probenoberflächen, z.B. Ultrafiltrationsmembranen, im Kontaktmodus abgebildet werden. Mit dem beschriebenen Ansatz konnten Elektroden mit einer Variationsbreite der (elektro)aktiven Fläche im mm- und sub-mm-Bereich hergestellt werden, wobei vereinfacht eine hemisphärische Geometrie angenommen und die (elektro)aktive Fläche mit Hilfe der zyklischen Voltammetrie abgeschätzt wurde.

Die wesentliche Limitierung dieses Lösungsansatzes ist jedoch sowohl in der Art der zu untersuchenden Proben zu sehen, als auch in der wenig reproduzierbaren Herstellung der elektrochemischen Sonden durch den Ätzund Isolationsprozess, sowie der schlechten topographischen Auflösung aufgrund der undefinierten Spitzengeometrie, wie es an Hand der Qualität der aufgenommenen AFM-Bilder mit abnehmender Spitzengröße demonstriert wurde. Mit der von Macpherson et al. dargestellten Elektrode kam es auch zu unerwünschten Kontakten mit der zu untersuchenden Oberfläche, z.B. blieb die Elektrode in Poren der Oberfläche hängen. Als Lösungsmöglichkeit für diese Problematik wurde von Macpherson et al. vorgeschlagen, eine Nicht-Kontakt-Version dieses Verfahrens zu verwenden, indem zunächst in einem ersten Schritt die zu untersuchende Oberfläche topologisch mit dem Cantilever abgescannt wird und dann, in einem separaten zweiten Schritt, die elektrochemische Untersuchung in bekanntem Abstand durchgeführt wird. Dieser Ansatz birgt aber nicht nur einen erheblichen Mehraufwand in sich, er ist auch mit systematischen Fehlern behaftet, da bei dem verwendeten Positioniersystem für die Elektrode Hystereseeffekte auftreten können und die Übertragung der topologischen Informationen eines Messvorganges auf einen nachfolgenden Messvorgang alleine schon dadurch nicht exakt möglich sein kann.

Arbeiten, denen ein metallisierter Cantilever im elektrochemischen AFM-Experiment zugrunde liegt (vgl. Macpherson et al., J. Am. Chem. Soc. 118 (1996), 6445-6452, Jones et al., J. Phys. Chem. B 104 (2000), 2351-2359) konnten zum einen keine laterale aufgelöste elektrochemische Information liefern, da der metallisierte Cantilever nur manuell am Glaskörper isoliert werden und keine definierte Mikroelektrode mit isolierter Ummantelung erzeugt werden konnte. Die Metallisierung diente zur elektrochemischen Oberflächenmodifikation (Lösungsverhalten eines (010)Kaliumhexacyanoferrat-Einkristalls), deren Topographie dann in situ ermittelt wurde. Zum anderen wurden mit einem metallisierten Cantilever an Luft Membranen abgebildet, die über ein mit Flüssigkeit gefülltes Kompartiment so gespannt wurden, dass der Cantilever nur an den Porenöffnungen Kontakt mit der Redoxmediatorenthaltenden Elektrolytlösung hat. Aufgrund der Messanordnung konnten so trotz mangelnder Isolierung am Cantilever die Poren der Membran elektrochemisch abgebildet werden, da der Feuchtigkeitsfilm über den Porenöffnungen die laterale Limitierung ergibt (vgl. Jenes et al., Elechem. Commun., 1 (1999), 55-60).

Aufgabe der vorliegenden Erfindung war daher, eine Vorrichtung für die gleichzeitige Durchführung einer elektrochemischen und einer topographischen Nahfeld-Mikroskopie zur Verfügung zu stellen.

Weiters sollen Verfahren zur Charakterisierung von Oberflächen zur Verfügung gestellt werden, bei welchen sowohl eine topologische als auch eine elektrochemische Information der zu untersuchenden Oberflächen geliefert werden. Günstigerweise sollten die neu zu schaffenden Messmethoden und Messelektroden ohne größeren Aufwand in bereits vorhandene Messanlagen integrierbar sein.

Weitere Aufgaben der vorliegenden Erfindung umfassen das zur Verfügungstellen von Elektroden mit gegenüber dem Stand der Technik deutlich verbesserter Messleistung und Messgenauigkeit.

Diese Aufgaben können erfindungsgemäß mit einer Vorrichtung für die gleichzeitige Durchführung einer elektrochemischen und einer topographischen Nahfeld-Mikroskopie gelöst werden, die einen Bereich zur topographischen Nahfeldmessung und einen Bereich zur elektrochemischen Nahfeldmessung umfasst, wobei sich der Bereich zur topographischen Nahfeldmessung wie üblich vollständig bis zur unmittelbaren Spitze der Vorrichtung (der Sonde zur topographischen Nahfeldmessung) erstreckt, wobei sich die erfindungsgemäße Elektrode dadurch auszeichnet, dass der Bereich zur Nahfeldmessung in einem definierten Abstand von der unmittelbaren Spitze beginnt, der Bereich zur topographischen Nahfeldmessung mit Ausnahme der unmittelbaren Spitze mit einem leitenden Material bedeckt ist, welches leitende Material mit Ausnahme des Bereiches zur elektrochemischen Nahfeldmessung von einem isolierenden Material bedeckt ist.

Mit der erfindungsgemäßen Vorrichtung ist es nunmehr möglich, über eine mehr oder weniger konventionelle topographische Nahfeldmessung den Abstand des Bereiches zur elektrochemischen Nahfeldmessung von der Probe konstant zu halten und somit die elektrochemische Nahfeldmessung ohne einen systematischen Fehler, der durch topologische Abweichungen der Oberfläche bedingt ist, zu messen.

Wesentlich für die erfindungsgemäße Vorrichtung, die mit integrierten oder kombinierten Elektroden zur Verfügung gestellt werden kann, ist, dass sich der Bereich zur Nahfeldmessung nicht bis zur äußersten Spitze der Vorrichtung (Sonde) zur topographischen Nahfeldmessung erstreckt, weil dadurch die Gefahr eines Kontaktes mit der Oberfläche sowie einer negativen Beeinflussung der Nahfeldmessung verbunden ist, sondern erst in einem definierten Abstand von der unmittelbaren Spitze beginnt.

Mit der erfindungsgemäßen Vorrichtung ist nunmehr ein gleichzeitiges Messen sowohl der Topologie als auch der elektrochemischen Eigenschaften im Nahfeld einer Oberfläche möglich, indem mittels topographischer Nahfeld-Mikroskopie über die unmittelbare Spitze der erfindungsgemäßen Vorrichtung die Topologie in an sich bekannter Weise ermittelt wird, gleichzeitig die erfindungsgemäße Vorrichtung aber an Hand dieser Oberflächeninformation so gegenüber der Probe justiert wird, dass sie sich in konstanter Entfernung zur Probenoberfläche befindet, wobei dann ebenfalls gleichzeitig die elektrochemischen Eigenschaften der Oberfläche durch den kombinierten, vorzugsweise integrierten Bereich zur elektrochemischen Nahfeldmessung ermittelt werden. Somit kann die elektrochemische oder chemische Information von der topographischen Information vollständig entkoppelt werden und durch den genau definierten konstanten Abstand ein unverfälschtes elektrochemisches oder chemisches Messsignal quantitativ in Korrelation mit den theoretisch bestimmten Stromwerten gemäß der Lösung der "Fick'schen"-Diffusionsgleichung erfasst werden.

Bei der erfindungsgemäßen Vorrichtung sind damit auch aufwendige und fehleranfällige Vorrichtungen zur Scherkraft-basierenden Höhenkontrolle (z.B. gemäß Ludwig et al.) bzw. piezoelektrische "Testvorrichtungen" (wie z. B. die "Stimmgabel" gemäß James et al.) nicht mehr erforderlich. Die erfindungsgemäße Vorrichtung kann aber, z.B. wenn spezifische experimentelle Fragestellungen dies erfordern sollten, selbstverständlich auch mit derartigen Elementen ausgestattet werden.

Der Abstand, den der Bereich zur Nahfeldmessung von der Sondenspitze aufweist, ist dabei so zu gestalten, dass es bei Berührung der Probe durch die Spitze zu keinen negativen Einflüssen auf die Elektrode kommt. Optimalerweise sollte die Dimension der Spitze der Sonde so justiert sein, dass sich beide Mikroskopiemethoden möglichst optimal entfalten können.

Für die Zwecke der vorliegenden Anmeldung sollen unter dem Begriff "Elektrode" auch alle möglichen Ultramikroelektroden-Ausführungen, inklusive Sensoren oder Aktuatoren, umfasst sein.

Erfindungsgemäß wird durch die Integration einer Ultramikroelektrode mit einer topologischen Rasternahfeldsonde die Abstandsregelung der integrierten Sonde auf einer beliebigen lokalen, physikalischen und chemischen Wechselwirkung zwischen Probe und erfindungsgemäßer Vorrichtung im Nahfeld ausgelegt. Dadurch wird eine quantitative Auswertung der gemessenen Daten gemäß der vorliegenden Erfindung erreicht.

Die topologische Raster-Nahfeld-Mikroskopie (z.B. "atomic force microscopy", AFM; scanning force microscopy, "SFM") zeichnet sich dadurch aus, dass die Topographie und Oberflächeneigenschaften mit einer Auflösung im molekularen bis atomaren Bereich durch Oberflächenkräfte zwischen einer scharfen Spitze, welche z.B. an einem flexiblen Hebelarm (Cantilever) fixiert ist und der Probe durch Auslenkung des Hebelarms gemessen wird. Allgemeine Darstellungen von verschiedenen, im Rahmen der vorliegenden Erfindung anwendbaren Techniken zur topographischen und elektrochemischen Nahfeld-Mikroskopie (Rastersondenmikroskopie) sind in Bottomley, (Anal. Chem. 70 (1998), 425R-475R) und in Wiesendanger (Scanning Probe Microscopy and Spectroscopy (Methods and Application) (Hrsg. R. Wiesendanger), Cambridge Press (1994)), welche hiermit als Offenbarung miteinbezogen werden, dargestellt. Im Rahmen der vorliegenden Erfindung wird dabei aber nicht nur die Topographie des Substrates vermessen, sondern durch den exakten Abstand im Nahfeldbereich der elektroaktiven Fläche auch eine Höhenkontrolle in der elektrochemischen Nahfeldmessung ermöglicht.

Diese Technologie, mit welcher Oberflächen und darauf befindliche Atome und Moleküle mit einer Auflösung im Sub-Nanometer-Bereich visualisiert werden können, geht auf die von Binning et al. (Phys. Rev. Lett. 56 (1986), 930-933) durchgeführten Arbeiten zurück, die auch in der EP 0 027 517 A beschrieben sind. Diese EP 0 027 517-A sowie diejenigen Dokumente, in denen diese EP-A zitiert sind, sollen hiermit als Offenbarung für diese Technologie mit einbezogen werden. Verschiedene biologische Einsatzmöglichkeiten sind z.B. in Baselt et al. (Proc. IEEE85 (4) (1997), 672-679) beschrieben.

Im Gegensatz zu den im Stand der Technik beschriebenen Kombinationen von elektrochemischer und topographischer Rastersonden-Mikroskopie (Macpherson et al., Anal. Chem. 72 (2000), 276-285) wird erfindungsgemäß eine noch genauere, einfacher herzustellende Vorrichtung, die risikoärmer durchzuführende elektrochemische Messungen ermöglicht, zur Verfügung gestellt, indem der Bereich zur elektrochemischen Nahfeldmessung sich nicht bis zur Spitze der Vorrichtung erstreckt, sondern in einem definierten Abstand hinter der Spitze befindet.

Für die Zwecke der vorliegenden Erfindung wird als "Bereich zur Kraftmessung" bzw. "Bereich zur elektrochemischen Nahfeldmessung" derjenige Teil oder Bereich der Vorrichtung verstanden, an welchem die jeweilige Wechselwirkung mit der zu untersuchenden Oberfläche eintritt, also der zu messende Effekt ursächlich in die Messvorrichtung als Signal aufgenommen wird. Für die topographische Nahfeldmessung wird dies in der Regel die unmittelbare Spitze einer geeigneten AFM-Nadel sein. Der "Bereich zur elektrochemischen Nahfeldmessung" wird in der Regel an der äußeren, der Probenoberfläche zugewandten Seite der elektrochemischen Nahfeldmessvorrichtung, beispielsweise einer metallischen Schicht, sein.

Der erfindungsgemäß vorzusehende definierte Abstand, den der Bereich zur elektrochemischen Nahfeldmessung von der unmittelbaren Sondenspitze, die zur topographischen Nahfeldmessung verwendet wird, aufweist, kann abhängig von der jeweiligen Auflösung, die erzielt werden soll, in weiten Bereichen variieren. Erfindungsgemäß haben sich hiefür definierte Abstände des Bereiches zur elektrochemischen Nahfeldmessung von der unmittelbaren Sondenspitze als ganz besonders geeignet herausgestellt, die im Bereich von 2,7 mm bis 10 nm, vorzugsweise 1 mm bis 50 nm, insbesondere 0,5 mm bis 100 nm, liegen.

Weiters wird erfindungsgemäß unter "unmittelbare Spitze" derjenige Teil der Sonde bzw. Vorrichtungsspitze verstanden, der am äußersten Ende dieser Spitze liegt und z.B. nur wenige Atome groß sein kann. Daraus folgt, dass sich erfindungsgemäß der Bereich zur elektrochemischen Nahfeldmessung zwar in der Regel auf dem Spitzenteil beispielsweise eines Cantilevers liegt, nicht aber an der unmittelbaren Spitze, an welcher die topographische Nahfeldmessung durchgeführt wird. Beruht die Nahfeldwechselwirkung zur topographischen Abbildung auf einer berührungsfreien Rasternahfeldtechnik, so kann sich der Bereich zur elektrochemischen Nahfeldmessung aber ausnahmsweise bis zur Spitze erstrecken.

Weiters sind erfindungsgemäß auch der Bereich, mit welchem Informationen über die Topologie der Oberfläche gewonnen wird, und der Bereich zur elektrochemischen Nahfeldmessung starr zueinander positioniert, im Gegensatz etwa zu Scherkraft-basierenden Höhenkontrollen bzw. anderen Methoden, bei welchen Schwingungserzeuger (piezoelektrische Elemente) zur Erlangung derartiger Informationen über die Oberfläche verwendet werden.

Mit der erfindungsgemäßen Vorrichtung wird nicht nur eine Kontaktierung der empfindlichen Elektrode mit der Oberfläche und die damit verbundenen Messfehler und mechanischen Gefährdungen der kombinierten oder integrierten Elektrode vermieden, sondern auch eine subsequente Untersuchung der Oberfläche (zuerst die Topologie, dann die elektrochemische Information), wie sie als Lösung des Problems von Macpherson et al vorgeschlagen worden ist, vermeidbar.

Wesentlich ist also, dass der Bereich zur elektrochemischen Nahfeldmikroskopie durch Bedecken der Vorrichtung zur topographischen Nahfeldmessung ("Spitze", Cantilever"') mit einem leitenden Material geschaffen wird. Dieses Bedecken kann vollständig sein ("Umhüllung"), es ist aber auch möglich, nur bestimmte Bereiche der Vorrichtung zur topographischen Nahfeldmessung (z.B. in Form von Leiterbahnen entlang der Längsachse des Cantilevers) mit leitendem Material zu bedecken.

Für den Fall, dass die Vorrichtung zur topographischen Nahfeldmessung selbst leitend ist (z.B. bei der Rastertunnelmikroskopiespitze; "scanning tunneling microscopy" (STM); oder bei "scanning nearfield optical microscopy" (SNOM-)Spitzen) muss natürlich in der erfindungsgemäßen Vorrichtung zunächst diese leitende Vorrichtung selbst isoliert sein, und auf dieser Isolierschicht das leitende Material für die elektrochemische Nahfeldmessung vorhanden sein. In diesem Fall wird die isolierte Form der Vorrichtung zur topographischen Nahfeldmessung mit dem leitenden Material (zumindest teilweise) bedeckt, um die Vorrichtung zur elektrochemischen Nahfeldmessung zu schaffen, welche ihrerseits dann ebenfalls (bis auf den Messbereich) isoliert werden muss.

Diese Isolierung der erfindungsgemäßen Vorrichtung ist wesentlich, da die elektrochemische Nahfeldmessung immer im flüssigen Medium (Elektrolyt; flüssige, leitende Phase) vorgenommen werden muss, und demgemäß die Teile der Vorrichtung zur elektrochemischen Nahfeldmessung, die nicht zur unmittelbaren Messung ("Messbereich") dienen, gegen das bei der Messung vorhandene flüssige Medium, das in der Regel die zu vermessende Oberfläche bedeckt, schützt, so dass es zu keinen unerwünschten Beeinflussungen dieser Messung kommt.

Bevorzugterweise besteht die erfindungsgemäße Vorrichtung aus einer Kraftmikroskopiespitze, die mit Ausnahme der unmittelbaren Spitze von einem leitenden Material umhüllt ist, welches Material mit Ausnahme des Bereiches zur elektrochemischen Nahfeldmessung von einem isolierenden Material bedeckt ist.

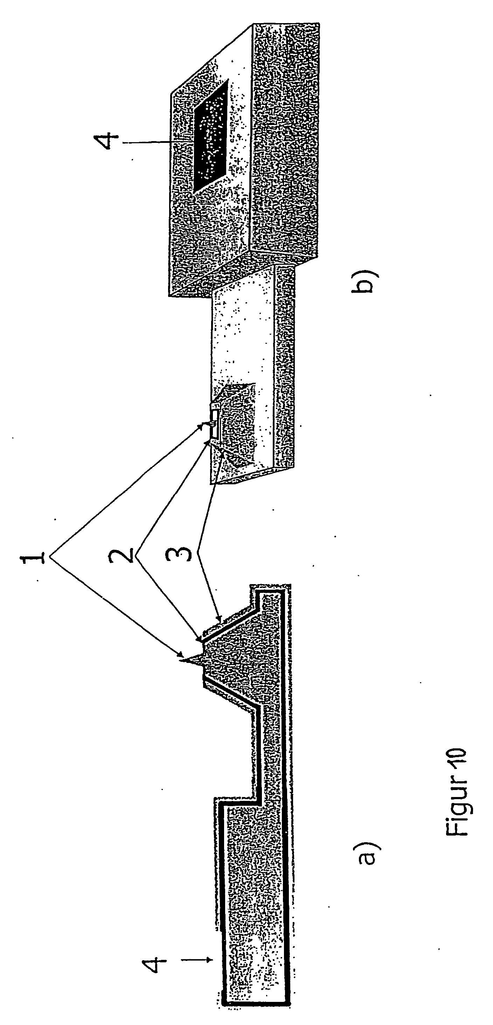

Ein Beispiel für einen derartigen Schichtaufbau ist in Fig. 10 dargestellt, wobei mit (1) der Bereich zur topographischen Nahfeldmessung, mit (2) der Bereich zur elektrochemischen Nahfeldmessung und mit (3) das isolierende Material bezeichnet ist. (4) stellt die Anschlußfläche dar, die elektrisch leitend mit dem Bereich zur elektrochemischen Nahfeldmessung verbunden ist.

Die Dicke des Bereiches zur elektrochemischen Nahfeldmessung bzw. des leitenden Materials ist ebenfalls von der jeweils zu erzielenden Auflösung bzw. dem eingesetzten Material abhängig. Bevorzugterweise liegen diese Dicken im Bereich von 10 bis 2000 nm, vorzugsweise 100 bis 800 nm, insbesondere 150 bis 500 nm.

Bevorzugterweise besteht der Bereich zur elektrochemischen Nahfeldmessung aus einem metallischen Element, insbesondere aus einem Übergangsmetall, wobei die Verwendung von Gold, Silber, Platin, Palladium, Wolfram, Antimon, Rhodium, Iridium, Quecksilber-Legierungen, Platin-Iridium-Legierung, Platin-Rhodium-Legierung, Kohlenstoff, Glaskohlenstoff, hochgeordneter pyrolytischer Graphit (HOPG), besonders bevorzugt ist. Weiters können auch andere Materialien, wie Polysilizium, insbesondere dotiertes Polysilizium, Metallnitride, insbesondere TiN oder TaN, oder Silizide, insbesondere Wolframsilizid oder Tantalsilizid, eingesetzt werden.

Erfindungsgemäß kann die erfindungsgemäße Vorrichtung auch mit weiteren Schichten bzw. unterschiedlichen Schichtfolgen ausgestattet sein und so mit einer modifizierten Elektrode zur Verfügung gestellt werden, die als Mikrobiosensor, wie z.B. als Enzymelektrode, pH-sensitive Ultramikroelektrode, potentiometrische oder amperometrische Ultramikroelektrode, Ionen-sensitive Ultramikroelektrode, Ionen-selektive Ultramikroelektrode, polymermodifizierte Ultramikroelektrode, biomimetische Ultramikroelektrode, ausgebildet ist. Anzahl und Anordnung der verschiedenen Bereiche zur elektrochemischen Nahfeldmessung in einer derartigen Multielektroden- und Multisensorkonfiguration sind demgemäß beliebig erweiterbar, indem eben diese Schichtfolge und Schichtanzahl variiert wird, um Multiparameter-Messung zu ermöglichen, wie z.B. simultanes, elektrochemisches, topographisches und pH-Mapping.

Gemäß einer bevorzugten Ausführungsform ist die erfindungsgemäße Vorrichtung daher mit Multielektroden und/oder Multisensoren-konfigurierten Elektroden ausgebildet, wobei vorzugsweise für unterschiedliche Messmethoden ausgerichtete Messsonden vorgesehen sind.

Weiters können auch mehrere Spitzen zur topographischen Nahfeldmessung bzw. mehrere erfindungsgemäße Kombinationsvorrichtungen zur topographischen und zur elektrochemischen Nahfeldmessung in ein und derselben Vorrichtung vorgesehen werden.

Die Verwendungsmöglichkeiten für die erfindungsgemäßen Vorrichtung gehen weiter über das an sich für die elektrochemische Raster-Mikroskopie bekannte (siehe z.B. US-PS 5 202 004 sowie US-PS 5 382 336, deren Offenbarung hiermit inkorporiert wird) hinaus, indem nunmehr beliebige Oberflächensysteme untersucht werden können, die von einem elektroaktiven Medium überschichtet sind.

Bevorzugte Verwendungen der erfindungsgemäßen Vorrichtungen sind die Untersuchung von biochemischen, biologischen oder biomimetischen Beschichtungen, von neurophysiologischen Problemstellungen, wie z.B. Zellkommunikation, Konzentrationsbestimmungen in extrazelluläre Matrizes, Membrancharakterisierungen und Transferphänomene, Elektronen-, Ionen- und Molekültransfers an Phasengrenzflächen, die Untersuchung von homogenen und heterogenen Elektronentransferreaktionen, Korrosionsphänomene, wie z.B. Korrosion von Metall und Halbleiteroberflächen, Entstehen von Korrosion/Defektstellen oder ähnlichen materialwissenschaftlichen Untersuchungen, wobei die Untersuchung von biologisch-medizinischen Fragestellungen sowie von Fragestellungen im Zusammenhang mit Halbleitern als besonders bevorzugt angesehen werden.

Die vorliegende Erfindung kann auch zur Oberflächenmodifikation oder Oberflächenstrukturierung durch Ätzen (Abtragen von Material) und/oder Abscheiden (Auftragen von Material) herangezogen werden.

Abscheidungen wie Ätzprozesse können zum einen in einer Zwei-Elektrodenanordnung durchgeführt werden, wobei die Mikroelektrode als Gegenelektrode und das Substrat als Arbeitselektrode fungiert. Modifikationen können nicht nur in Elektrolytlösungen sondern auch in festen Ionenleitern durchgeführt werden. Durch Anlegen eines Potentials zwischen Gegenelektrode und Arbeitselektrode können Reduktionsprozesse bzw. Oxidationsprozesse an der Grenzfläche Substratelektrode/Elektrolyt bzw. Ionenleiter induziert werden, so dass durch das lokale elektrische Feld Abscheidungen bzw. Ätzungen in der Größenordnung der Mikroelektrode erzeugt werden können. Zum anderen kann in einer Vier-Elektrodenanordnung ein geeigneter Mediator an der Mikroelektrode umgesetzt werden, der zum Substrat (leitend oder nichtleitend) diffundiert und dort durch Oxidation bzw. Reduktion einen Abscheidungsprozess bzw. Ätzprozess induziert. Abscheidungen bzw. Ätzungen können an Metallen, Halbmetallen und Legierungen vorgenommen werden, darüberhinaus können auch Polymere erzeugt werden, die durch elektrochemische Polymerisation hergestellt werden können (vgl. Mandler et al., Isr. J. Chem. 36 (1996), 73-80).

Speziell durch den bevorzugten schichtweisen Aufbau kann die Dimensionierung des Bereiches zur elektrochemischen Nahfeldmessung reproduzierbar verkleinert werden. Das Vorsehen von dünnen Schichten ist im Vergleich zu den in der Literatur beschriebenen Verfahren, die von einer Drahtform ausgehen, technisch sehr viel einfacher und reproduzierbarer zu gestalten als bei der Drahtform.

Die Spitze der erfindungsgemäßen Vorrichtung kann auch, wenn notwendig, speziell auf die topologische Untersuchung adaptiert sein, wie es an sich für die Kraftmikroskopie bekannt ist und als Sensor oder Aktuator ausgebildet sein bzw. spezielle Beschichtungen aufweisen, insbesondere wenn beispielsweise besondere biologische Fragestellungen untersucht werden sollen.

Die erfindungsgemäße Vorrichtung kann auch gemäß anderen bevorzugten Ausführungsformen derart ausgebildet sein, dass eine topographische Nahfeld-Spitze, z.B. eine AFM-Spitze, beispielswiese nur entlang einer Seite eine gegenüber dem Medium isolierte leitende Schicht trägt. Weiters kann auch der Bereich zur elektrochemischen Nahfeldmessung seitlich vorgesehen werden oder für die Elektrode generell andere Geometrien gewählt werden. Die topographische Rastermessung im Kontaktmodus wie auch im Tappingmodus erfordert eine scharfe Spitze, da die erzielbare Auflösung vom Krümmungsradius abhängig ist. Die integrierte Ultramikroelektrode hingegen kann bevorzugterweise in Form eines Ringes, eines Rahmens, einer Scheibe oder einer konischen bzw. zylindrischen Form sein (für diese Geometrien gibt es bereits theoretische Beschreibungen des Stromsignals, ausgenommen der Rahmenform).

Die vorliegende Erfindung betrifft gemäß einem weiteren Aspekt auch ein Verfahren zur ultramikroskopischen Untersuchung von Oberflächen, welches sich dadurch auszeichnet, dass eine erfindungsgemäße Vorrichtung durch an sich bekannte Mittel in die Nähe der zu untersuchenden Oberfläche gebracht wird, so dass sowohl der Abstand zur Oberfläche durch eine topographische Nahfeldtechnik gemessen werden kann, als auch eine elektrochemische Nahfeldmessung der Oberfläche durchgeführt werden kann, und die Oberfläche durch Bewegen der Vorrichtung über die Oberfläche untersucht wird, wobei die durch die topographische Nahfeldtechnik erhaltene Information unmittelbar dazu verwendet wird; die erfindungsgemäße Vorrichtung in etwa gleichem Abstand zur Oberfläche zu halten, so dass die elektrochemische Nahfeldmessung ohne Beeinträchtigung durch topologische Schwankungen durchgeführt werden kann.

Damit wird erstmalig eine gleichzeitige elektrochemische Nahfeldmikroskopie und topographische Nahfeldmessung ermöglicht, die durch keinerlei systematische Fehler bei der Korrelation der beiden Mikroskopietechniken verbunden ist.

Schließlich betrifft die vorliegende Erfindung auch ein Nahfeld-Mikroskop zur ultramikroskopischen Untersuchung von Oberflächen, umfassend

-    eine erfindungsgemäße Vorrichtung,
-    eine Analyseeinheit, in der die an der Vorrichtung gemachten Messungen erfasst und verarbeitet werden,
-    Mittel zur Übertragung der elektrochemischen Nahfeldmessung von der Vorrichtung zur Analyseeinheit,
-    Mittel zur Übertragung der topographischen Nahfeldmessung von der Spitze der Vorrichtung zu der Analyseeinheit, und
-    Manipulationselemente für die erfindungsgemäße Vorrichtung, die durch die Analyseeinheit steuerbar sind.

Dieses erfindungsgemäße Nahfeld-Mikroskop kann vom Fachmann ohne weiteres aufgrund der bekannten Vorrichtungs- und Messelemente für die topographische Nahfeldmessung einerseits und für die elektrochemische Nahfeldmessung andererseits unter Zuhilfenahme der vorliegenden Lehre adaptiert werden.

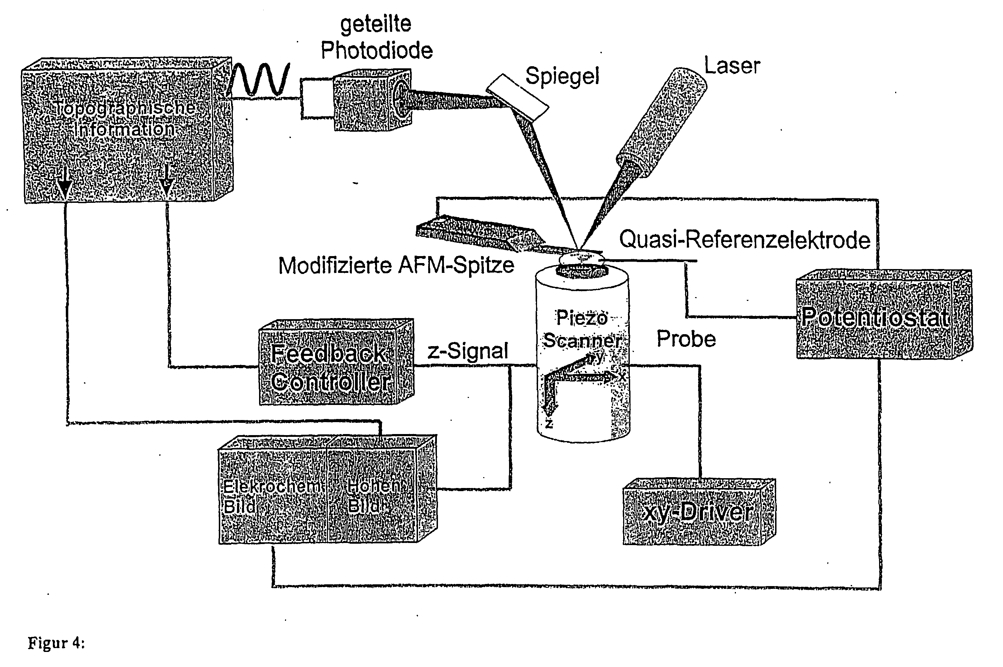

Überraschenderweise hat sich herausgestellt, dass die erfindungsgemäße Vorrichtung, beispielsweise in einfacher Weise in bereits am Markt befindliche AFM-Mikroskope integriert werden kann, und die Information hinsichtlich der elektrochemischen Nahfeldmessung sowie zur Durchführung der äquidistanten Nahfeldmessung selbst durch lediglich handwerkliche Schritte durchgeführt werden kann. In der Regel bieten die bereits am Markt befindlichen AFM-Vorrichtungen, wie z.B. Digital Instrument Nanoscope III, neben den Kanälen für die vorgesehene Datenerfassung einen bzw. weitere analoge Eingangskanal/-kanäle auf der Datenerfassungseinrichtung, die ein zusätzliches Einlesen von Messdaten, z.B. den elektrochemischen Messdaten, und die Korrelation bzw. Darstellung mit den gleichzeitig erfassten topographischen Daten ermöglicht (siehe Fig. 4).

Gleichzeitig wird mit der vorliegenden Erfindung auch ein einfaches Verfahren zur Herstellung der erfindungsgemäßen Vorrichtung zur Verfügung gestellt, bei welchem eine topographische Nahfeld-Mikroskopiesonde mit einem leitenden Material bedeckt wird, das leitende Material mit einer Isolierschicht bedeckt wird und das leitende Material an die Isolierschicht im Bereich der unmittelbaren Spitze der Sonde entfernt wird. Mit dem vorliegenden Verfahren kann nicht nur eine geeignete Ultramikroelektrode, die elektrochemische Untersuchungen von Oberflächen bei gleichzeitiger Bestimmung der Oberflächentopologie erlaubt, zur Verfügung gestellt werden, sondern es wird erfindungsgemäß mit einem verblüffend einfachen Verfahren die gut reproduzierbare Herstellung dieser Elektroden ermöglicht. Das erfindungsgemäße Verfahren ist auch leicht in bereits bestehende Fabrikationsprozesse einzufügen, da beispielsweise herkömmliche Kraftmikroskopiesonden als Ausgangsmaterial eingesetzt werden können. Durch das erfindungsgemäße Verfahren wird sichergestellt, dass sich der Bereich zur elektrochemischen Nahfeldmessung der Vorrichtung, welcher durch das leitende Material definiert wird, das nach der Entfernung der Isolierschicht die von der Probenoberfläche erhaltenen Signale aufnehmen kann, nicht bis zur äußersten Spitze der Vorrichtung reicht, sondern in einem definierten Abstand von der unmittelbaren Spitze der Vorrichtung (an der die zur topologischen Abbildung gemessene Wechselwirkung mit der Oberfläche stattfindet) beginnt. Dadurch wird nicht nur die Gefahr eines Kontaktes der elektrochemischen Nahfeldmesseinrichtung mit der Oberfläche verhindert, sondern auch eine negative Beeinflussung der topologischen Nahfeldmessung.

Wesentlich für das erfindungsgemäße Verfahren ist, dass ausgehend von einer zur topographischen Nahfeldmessung geeigneten Sonde durch das Aufbringen und Isolieren eines leitenden Materials in einfacher Weise die elektrochemische Nahfeldmessung mit der topographischen Nahfeldmessung verbunden werden kann. Durch das Entfernen von leitendem Material und Isolierschicht im Bereich der unmittelbaren Spitze der zur topographischen Nahfeldmessung geeigneten Sonde wird nicht nur die zur topographischen Nahfeldmessung erforderliche Spitze wieder funktionsfähig gemacht, sondern auch ein Bereich geschaffen, mit welchem das leitende Material zur Messung von Oberflächeneffekten im elektrochemischen Nahfeld wieder zugänglich gemacht wird. Die Isolierschicht über dem leitenden Material bewirkt, dass die Signale nur über den Bereich eintreten, der gezielt freigelegt worden ist.

Die Art und Weise wie die Bedeckung der topographischen Nahfeldsonde mit dem leitenden Material erfolgt ist nicht kritisch. Im Allgemeinen wird es aus verfahrenstechnischen Gründen bevorzugt sein, dass die topographische Nahfeldsonde mit dem leitenden Material umhüllt wird. Es ist aber auch möglich, beispielsweise nur eine Seite der Sonde mit dem leitenden Material zu versehen. Wesentlich ist dabei nur, dass die leitende Schicht von dem Bereich, in dem die elektrochemische Nahfeldwechselwirkung mit der Oberfläche gemessen werden soll, in einem anderen Bereich der erfindungsgemäßen Vorrichtung einer geeigneten Kontaktstelle zugeführt wird, an welcher das Messsignal abgeleitet werden kann.

Die bevorzugten leitenden Materialien sind entweder Metalle, oder sie enthalten eine metallische Komponente, insbesondere ein Übergangsmetall, wobei die Verwendung von Gold, Silber, Platin, Palladium, Wolfram und Antimon besonders bevorzugt ist. Weiters können auch Materialien, wie Polysilizium, Titannitrid, Rhodium, Iridium, Quecksilber-Legierungen, Platin-Iridium-Legierung, Platin-Rhodium-Legierung, Kohlenstoff, Glaskohlenstoff, hochgeordneter pyrolytischer Graphit (HOPG), als bevorzugte Materialien angesehen werden. Weiters können auch andere Materialien, wie Polysilizium, insbesondere dotiertes Polysilizium, Metallnitride, insbesondere TiN oder TaN, oder Silizide eingesetzt werden.

Die Art und Weise, wie die topographische Nahfeld-Mikroskopiesonde mit dem leiten-den Material bedeckt wird, ist nicht kritisch und vom jeweils aufzubringenden Material abhängig. Besonders bewährte Methoden umfassen das Ionen-Sputtern, das Elektronen-Sputtern, chemical vapour deposition (CVD)-Abscheidungen, electroless Plating, electroplating, usw., im Einzelnen sind aber auch Flüssigphasenabscheidungsprozesse und Spincoating-Verfahren denkbar.

Das Bedecken der Schicht aus leitendem Material mit der Isolierschicht erfolgt bevorzugterweise durch Abscheidung aus der Gasphase durch einen chemical vapour deposition-Prozess, insbeson dere aber auch durch einen plasmaunterstützten CVD-Prozess, Ionen-Sputtern, Elektronen-Sputtern, electroless Plating, electroplating und Aufbringen von isolierenden Polymerschichten, im Einzelnen sind aber auch Flüssigphasenabscheidungsprozesse und Spincoating-Verfahren denkbar. Bei der Isolierung ist sicherzustellen, dass das leitende Material vollständig bedeckt wird, so dass das leitende Material (außer dem später freigelegten Messbereich) keinen Kontakt zum elektroaktiven Medium hat.

Die Freilegung eines bestimmten Bereiches der leitenden Schicht erfolgt durch die gezielte Entfernung der Isolierschicht und der Schicht aus leitendem Material. Das Entfernen des leitenden Materials und/oder das Entfernen der Isolierschicht erfolgt bevorzugterweise durch einen fokussierten Ionenstrahl, gegebenenfalls einen Neutralteilchenstrahl, durch einen Ätzprozess, durch Laser oder durch fokussierte elektromagnetische Wellen, wobei die Entfernung durch fokussierten Ionenstrahl besonders bevorzugt ist (siehe z.B. Matsui et al., Nanotechnology 7 (1996), 247-258).

Die Dimensionierung der Schichten (mit welcher im Wesentlichen der Bereich, mit welchem elektrochemischen Nahfeldeffekte gemessen werden, definiert wird) ist abhängig vom jeweiligen Einsatzgebiet und/oder dem Auflösevermögen der erfindungsgemäßen Vorrichtung, bevorzugterweise wird demgemäß das leitende Material in einer Dicke von 10 bis 2000 nm, vorzugsweise von 100 bis 800 nm, insbesondere von 150 bis 500 nm aufgetragen. Denkbar ist aber auch eine monoatomare oder monomolekulare leitende Schicht.

Die Isolierschicht wird bevorzugterweise in einer Dicke von 50 bis 5000 nm, vorzugsweise von 100 bis 2000 nm, insbesondere von 500 bis 1500 nm, aufgetragen und muss für die Untersuchung chemisch inerter bzw. nicht leitender Substrate mit der elektroaktiven Fläche der Elektrode korreliert sein, da die Diffusionsblockierung bei derartigen Proben deutlich von der Fläche der isolierenden Schicht abhängt (vgl. Mirkin et al.,J. Electroanal. Chem. 328 (1992), 47-62).

Die numerischen Lösungen der Differentialgleichungen für Isolatoren wurden mit einem Radienverhältnis elektroaktive Fläche/isolierender Ummantelung (RG) von 10 ermittelt. (vgl. Kwak et al., Anal. Chem. 61 (1989), 1221-1227). Die Schichtdicke muss jedoch eine hinreichende Isolierung der elektroaktiven Fläche gewährleisten und sollte einen RG von 10 nicht unterschreiten, da die experimentellen Werte dann signifikant höher liegen als die durch Simulationen erhaltenen Daten. Auch hier sind jedoch monoatomare bzw. monomolekulare Schichten denkbar.

Der Bereich, in dem das leitende Material und die Isolierschicht abgetragen werden, richtet sich ebenfalls nach dem geplanten Einsatzgebiet der erfindungsgemäßen Vorrichtung bzw. deren Messeigenschaften bzw. sind auch abhängig von der jeweiligen Methode zur Abtrennung dieser Schichten. Bevorzugterweise wird ein Bereich von der unmittelbaren Spitze bis zu einem Abstand von der unmittelbaren Spitze von 10 bis 2000 nm, vorzugsweise von 50 bis 1000 nm, insbesondere von 100 bis 500 nm, abgetragen, wobei in jedem Einzelfall die besondere Geometrie der zur topographischen Nahfeldmessung geeigneten Sonde, von der ausgegangen wird, zu berücksichtigen ist.

Bevorzugterweise wird bereits im erfindungsgemäßen Herstellungsverfahren selbst vorgesorgt, dass an der erfindungsgemäßen Vorrichtung geeignete Anschlussvorrichtungen zur Abnahme der Messsignale vorgesehen werden.

Die Erfindung wird an Hand der nachfolgenden Ausführungsbeispiele sowie der Zeichnungsfiguren, auf die sich jedoch nicht beschränkt ist, näher erläutert.

Es zeigen:

Fig. 1: Berechnete Strom-Abstandskurven von Mikroelektroden bei der Annäherung an eine Oberfläche. Der Abstand D ist auf den Radius R der Elektrode normiert, der Strom $i_T$ ist auf den Strom $i_{T_\infty}$ der unbeeinflussten Umsetzung normiert. (a) Annäherung an ein leitendes Substrat. (b) Bereich der unbeeinflussten Umsetzung. (c) Annäherung an einen Isolator;

Fig. 2: die Abhängigkeit des Arbeitsabstandes von der Elektrodengröße;

Fig. 3:

(a) die schematische Darstellung der Abstandskontrolle über optische Detektionsmethode und der Diffusionslimitierung im Nahfeldbereich durch eine isolierende bzw. chemisch inerte Probenoberfläche;
(b) die schematische Darstellung der Abstandskontrolle über optische Detektionsmethode und der Rezyklisierung der elektroaktiven Substanz im Nahfeldbereich durch eine leitende bzw. chemisch aktive Probenoberfläche;

Fig. 4: die schematische Darstellung des Messaufbaus, wenn der erfindungsgemäßen Nahfeldsonde ein AFM-Cantilever zugrunde liegt;

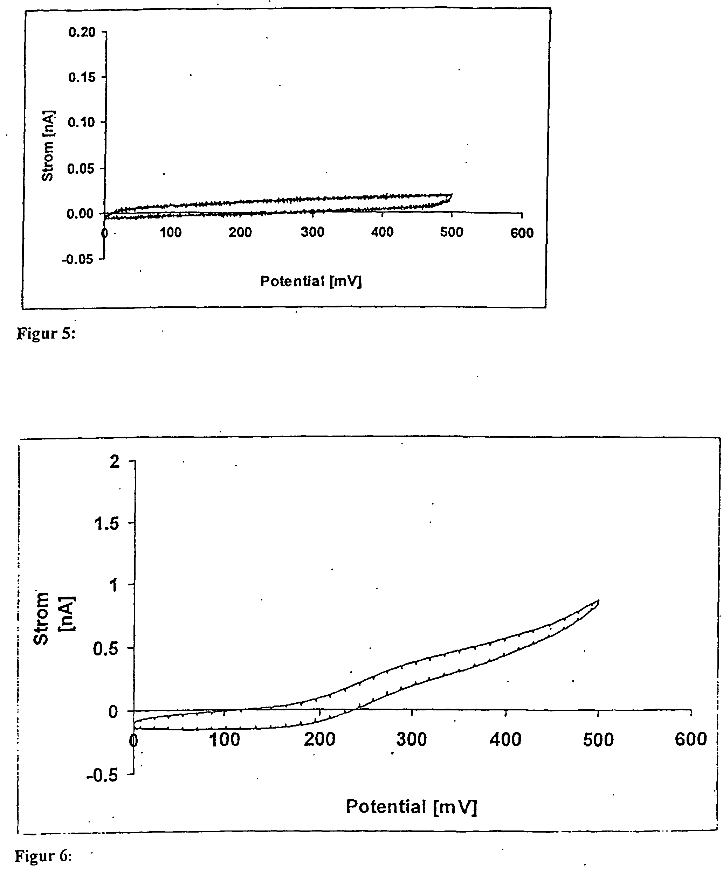

Fig. 5: ein zyklisches Voltammogramm einer isolierten Nahfeldsonde 200 nm Gold, 800 nm Isolation, aufgenommen in 5 mM $K_4[Fe(CN)_6]$/0,1 M KCl. Vorschubgeschwindigkeit 100 mV/s;

Fig. 6: ein zyklisches Voltammogramm einer integrierten elektrochemischen Nahfeldsonde 100 nm Gold, 800 nm Isolation, aufgenommen in 5 mM $K_4[Fe(CN)_6]$/0,1 M KCl; Vorschubgeschwindigkeit 100 mV/s;

Fig. 7:

(a) eine schematische Darstellung eines beispielhaften AFM-Cantilever nach der Aufbringung einer elektroaktiven Schicht und einer Isolationsschicht;
(b) die AFM-Abbildung eines Gold-GaAS-Gitters mit einer Periodizität von 3,4 µm mit einem kommerziellen $Si_3N_4$-Cantilever im Kontaktmodus;
(c) die AFM-Abbildung des Gold-GaAS-Gitters mit einer Periodizität von 3,4 µm mit einem erfindungsgemäßen, metallbeschichteten (200) nm Gold) und isolierten (800 nm Nitrid) AFM-Cantilever im Kontaktmodus;

Fig. 8:

(a) eine schematische Darstellung des beispielhaften AFM-Cantilevers nach den ersten beiden Frässchritten;

(b) die AFM-Abbildung einer p-dotierten Siliziumoberfläche nach der Abscheidung von Octadodecylsiloxan-Inseln, abgebildet mit einem kommerziellen $Si_3N_4$-Cantilever im Kontaktmodus (Abbildungsraster 10 x 10 µm) Inselgröße $\sim$ 1-2 µm, Höhe ~ 2,6 nm.

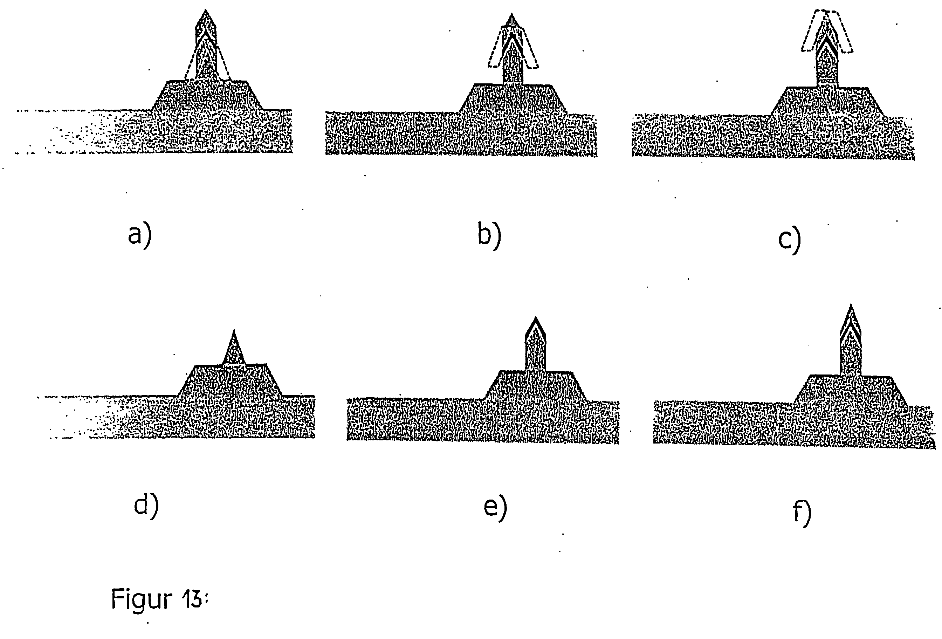

(c) die AFM-Abbildung der Octadecylsiloxan-Inseln im Kontaktmodus (Abbildungsraster 10 x 10 µm) mit der erfindungsgemäßen modifizierten Sonde (200 nm Gold, 800 nm Isolationsschicht, Krümmungsradius - 300 nm, Höhe $\sim$ 2 µm (Herstellungsschritt Fig. 13a)).

(d) eine Abbildung von 300 nm Goldpunkte auf einem GaAS-Substrat mit einem kommerziellen $Si_3N_4$-Cantilever, im Kontaktmodus.

(e) eine Abbildung von 300 nm Goldpunkte auf einem GaAS-Substrat im Kontaktmodus mit der erfindungsgemäßen modifizierten Sonde (200 nm Gold, 800 nm Isolationsschicht, Krümmungsradius ~ 300 nm, Höhe 2 µm; und

Fig. 9:

(a) eine schematische Darstellung einer erfindungsgemäßen Rasternahfeldsonde mit integrierter Ultramikroelektrode basierend auf einem AFM-Cantilever.

(b) die AFM-Abbildung eines Gold-GaAS-Gitters mit einer Periodizität von 3,4 µm mit einem kommerziellen $Si_3N_4$-Cantilever im Kontaktmodus an Luft.

(c) die AFM-Abbildung des Gold-GaAS-Gitters mit einer Periodizität von 3,4 µm im Kontaktmodus mit einer erfindungsgemäßen Rasternahfeldsonde mit integrierter Ultramikroelektrode (Spitzenhöhe $\sim$ 1 µm).

Fig. 10: eine Prinzipskizze der erfindungsgemäßen Vorrichtung im schematischen Querschnitt (a) und in der schematischen Aufsicht (b);

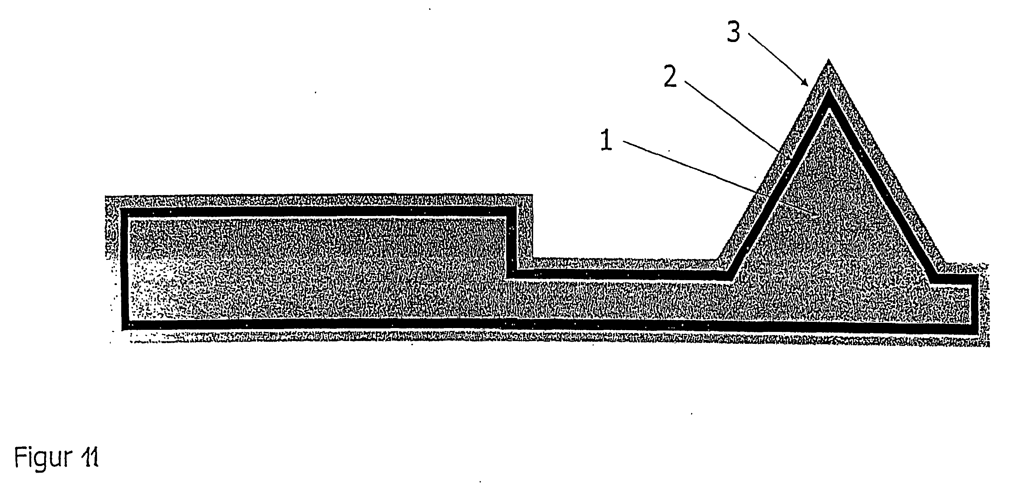

Fig. 11: eine Prinzipskizze zur Beschreibung eines Herstellungsverfahrens für die erfindungsgemäße Vorrichtung;

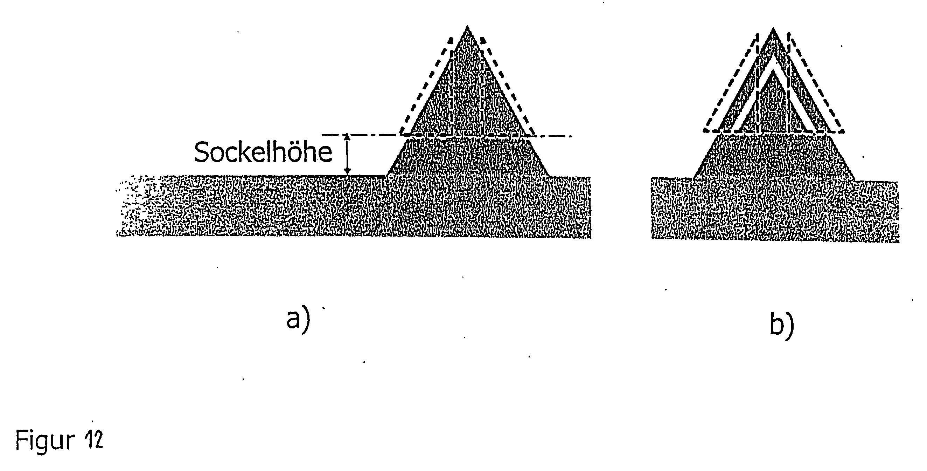

Fig. 12: eine Prinzipskizze zur Beschreibung des Herstellungsverfahrens für die erfindungsgemäße Vorrichtung in Seitenflächenansicht (a) und Stirnflächenansicht (b);

Fig. 13: eine Prinzipskizze zur Beschreibung des Herstellungsverfahrens der erfindungsgemäßen Vorrichtung;

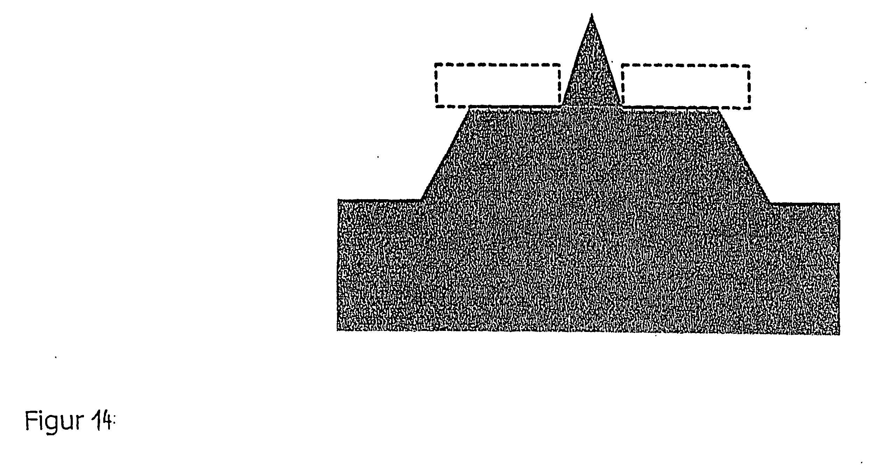

Fig. 14: eine Prinzipskizze für ein Herstellungsverfahren der erfindungsgemäßen Vorrichtung;

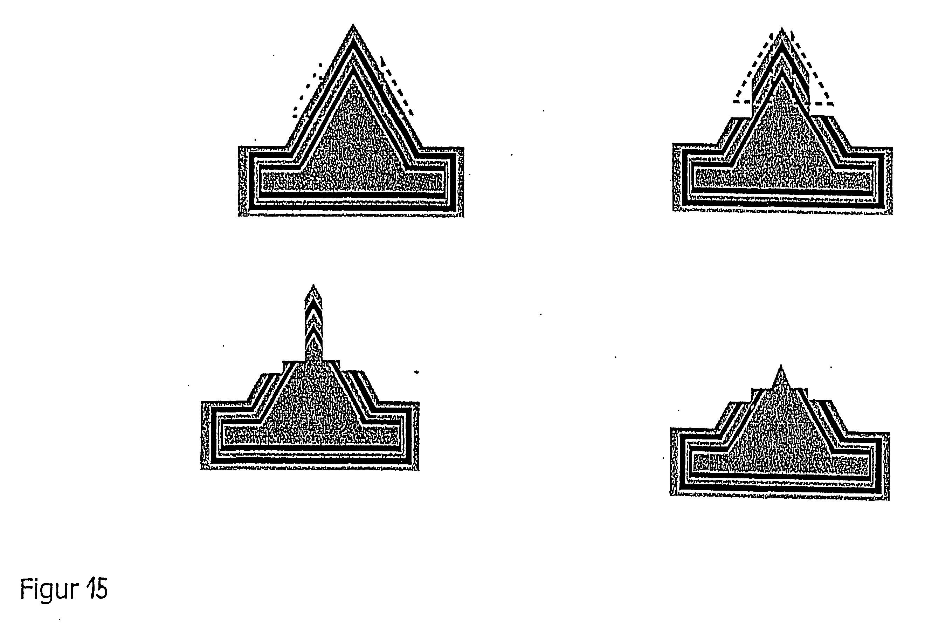

Fig. 15: Prinzipskizzen zur Beschreibung eines Herstellungsverfahrens für die erfindungsgemäße Vorrichtung in Multielektroden-Form;

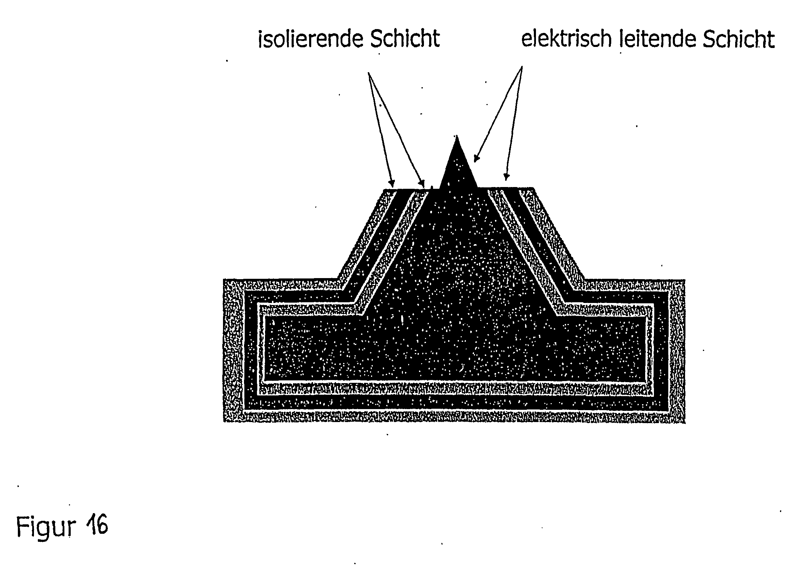

Fig. 16: eine Prinzipskizze für erfindungsgemäße Multielektroden mit elektrisch leitender Messspitze;

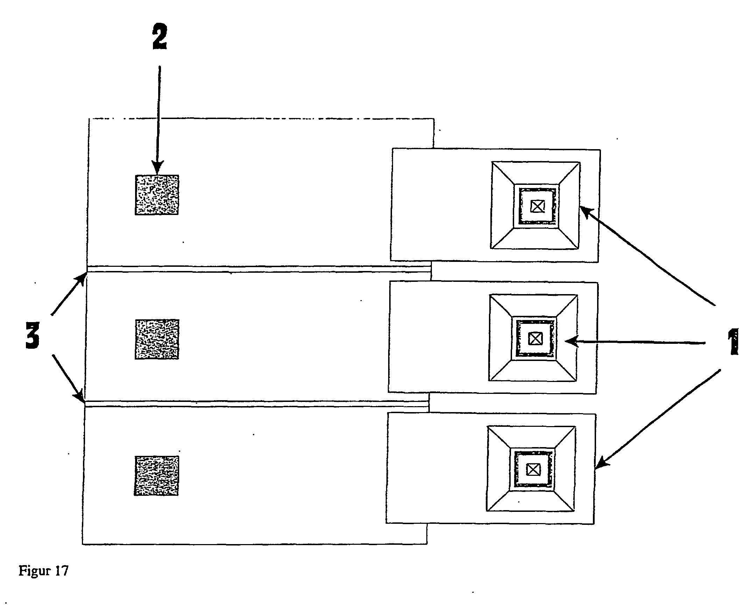

Fig.17: eine Ausführungsform mit mehreren parallel auf einem Grundkörper angeordneten Einzelspitzen;

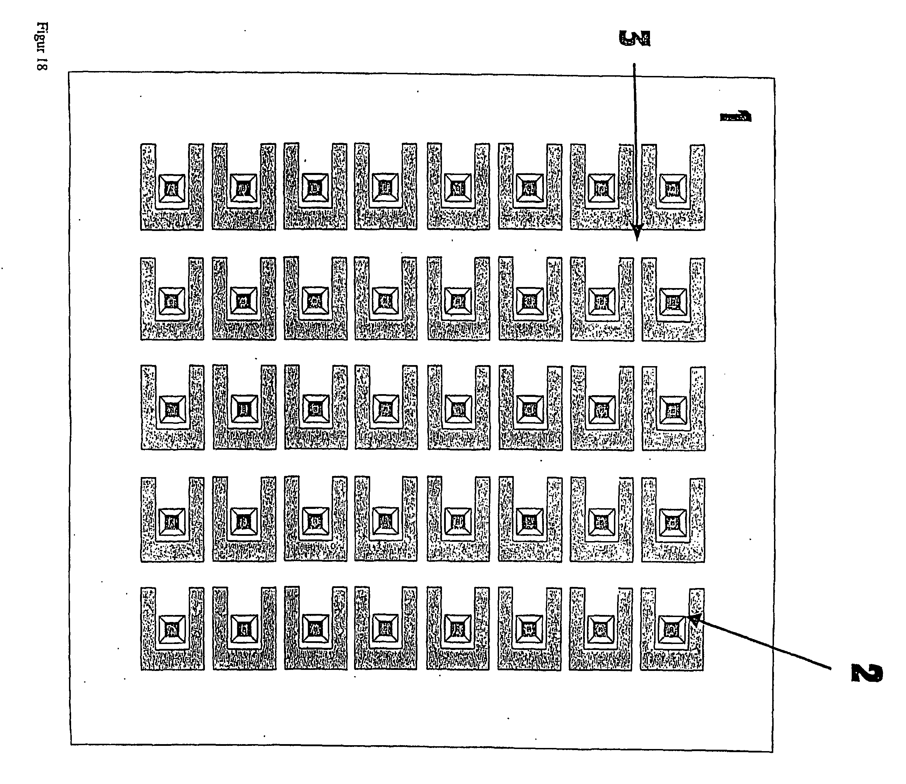

Fig.18: eine Ausführungsform in Form eines Spitzenarrays;

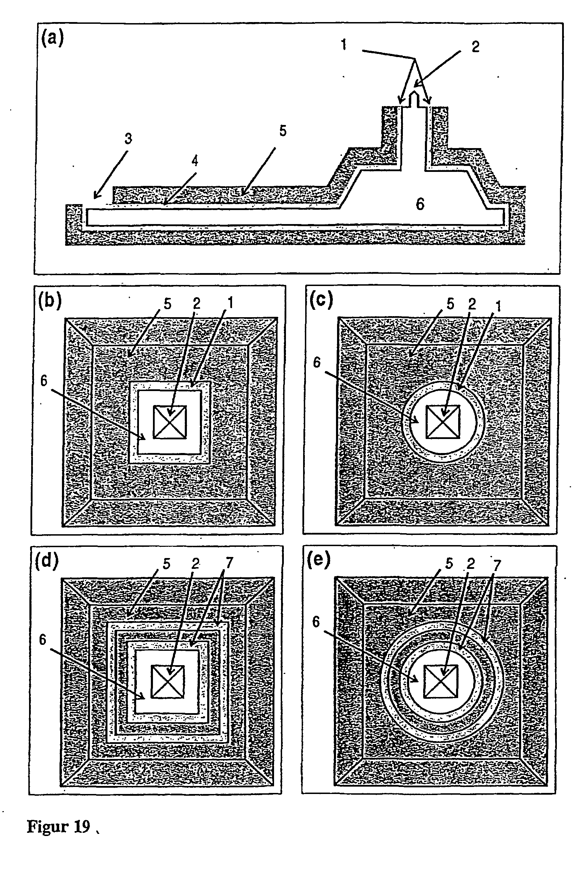

Fig.19: eine schematische Darstellung einzelner und multipler integrierter Rahmen/Ring Mikro/Nanoelektroden; und

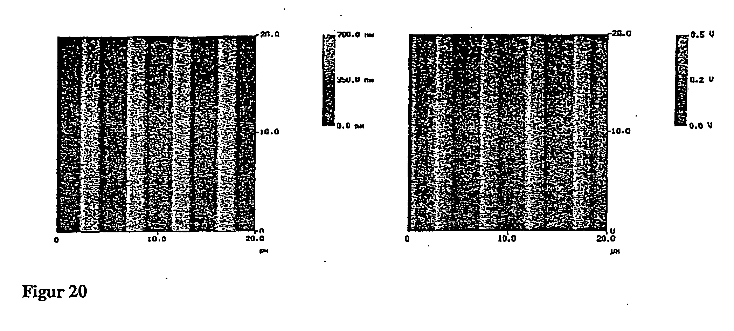

Fig.20: eine kombinierte AFM-SECM Messung mit der erfindungsgemäßen Messanordnung.

**Beispiele :**

**Beispiel 1: Herstellung der Nahfeldsonde mit integrierter Ultramikroelektrode**

Zur Herstellung wird im ersten Schritt der Cantilever und der Glaskörper mit einem beliebigen Elektrodenmaterial, wie z.B. Gold, beschichtet. Durch unterschiedliche Beschichtungszeiten kann die Dicke der Elektrodenschicht variabel und reproduzierbar hergestellt werden. Durch die Vielzahl der zur Verfügung stehenden Elektrodenmaterialien können die gewünschten Eigenschaften der Ultramikroelektrode eingestellt werden, wie z.B. die Verwendung einer Antimon-Ultramikroelektrode für pH-sensitive Messungen.

Zur elektrischen Isolierung der (elektro)aktiven Fläche wird der nunmehr beschichtete Cantilever z.B. mit einer Siliziumnitridschicht modifiziert. Die Aufbringung der Isolationsschicht erfolgt z.B. mit Hilfe einer Plasma-enhanced Chemical Vapor Deposition bei einer Temperatur von z.B. 300°C und einem Gasgemisch aus $SiH_4$ und $NH_3$ im Druckbereich von einigen Torr und im Leistungsbereich von einigen 10 W Leistung. Die Isolierung kann den Cantilever umschließen, muss jedoch mindestens die leitende Schicht vollständig isolieren und bei den Messungen in flüssigen Medien gegenüber den eingesetzten Lösungen beständig sein. Durch unterschiedliche Beschichtungszeiten kann die Schichtdicke der Nitridschicht und somit der Grad der Isolierung festgelegt werden.

Das Freilegen der (elektro)aktiven Fläche wird mit Methoden der Mikrostrukturtechnik, wie z.B. die Focused Ion Beam (FIB)-Technik, erzielt. Die Spitze des Cantilevers kann dabei so gefräst werden, dass eine planare Ultramikroelektrode, wie z.B. eine Rahmenmikroelektrode, erzeugt wird. In der Mitte dieser Ringelektrode wird die ursprüngliche Rasternahfeldspitze mit Hilfe der FIB-Technik so geätzt, dass sie einen kleinen definierten Krümmungsradius für die topographische Abbildung besitzt.

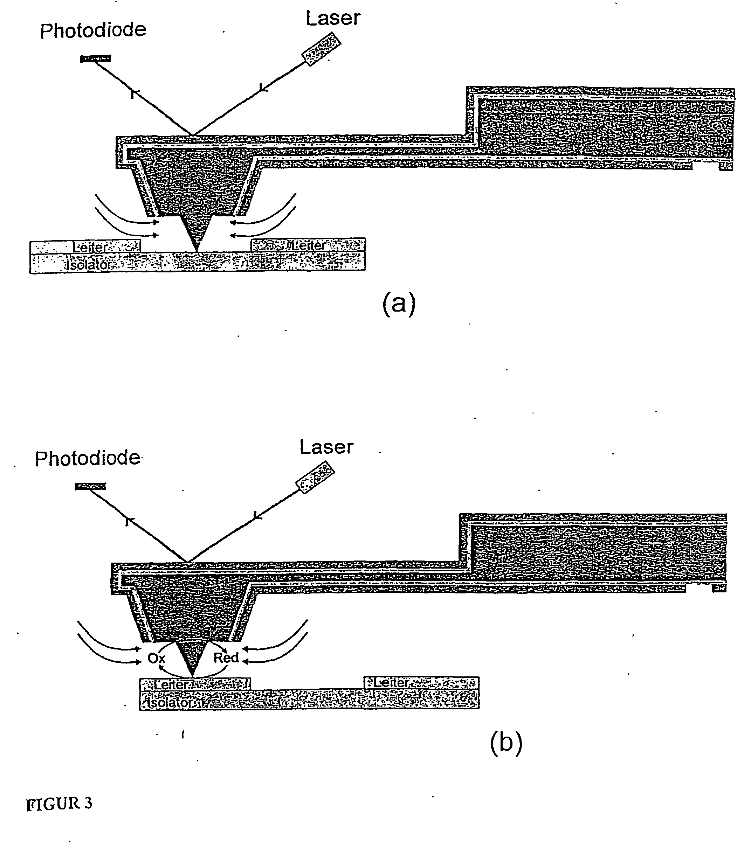

Die Länge der Abstandsspitze wird nun korreliert zum Ultramikroelektrodenradius variiert, so dass der Abstand der Ultramikroelektrode sich in sensitiven Arbeitsbereich zur Probe befindet (siehe Fig. 1). Da der Arbeitsabstand aufgrund der kontrollierten Abstandsregelung den Radius der Mikroelektrode unterschreiten kann, wird eine weitere Verbesserung der Auflösung erzielt (Fig. 3).

Als Ausführungsbeispiel wurde die nach dem erfindungsgemäßen Verfahren hergestellte integrierte Rasternahfeldsonde mit integrierter Ultramikroelektrode in ein AFM eingebaut (Fig. 4).

Für eine erfindungsgemäße Nahfeldsonde mit einem leitenden Kern gilt sinngemäß das beschriebene Verfahren für einen nichtleitenden Kern mit folgenden Modifikationen:

(i) Aufbringen einer Isolatorschicht auf den leitenden Kern;
(ii) Aufbringen einer leitenden Schicht;
(iii) Nochmaliges Aufbringen einer Isolatorschicht;
(iv) Mit einem Material abtragenden Verfahren wird die ursprüngliche Spitze wieder freigelegt.

Für eine erfindungsgemäße Nahfeldsonde mit einem lichtleitenden Kern, wie z.B. einer Lichtleiterfaser, gilt sinngemäß das beschriebene Verfahren für einen nichtleitenden Kern mit folgenden Modifikationen:

(i) Aufbringen einer leitenden Schicht;
(ii) Aufbringen einer Isolatorschicht;
(iii) Mit einem Material abtragenden Verfahren wird die ursprüngliche Spitze wieder freigelegt.

Die elektrochemischen Eigenschaften der erfindungsgemäßen Rasternahfeldsonden und ihre Anwendbarkeit zur lokalen Charakterisierung als auch die Qualität der einzelnen Fabrikationsschritte können mit elektrochemischen Methoden, wie z.B. der zyklischen Voltammetrie, untersucht werden.

Beispielhaft wird dies an einem $Si_3N_4$-Cantilever gezeigt, der mit 200 nm Gold und einer isolierenden Schicht von 800 nm $Si_3N_4$ modifiziert wurde. Das Zyklovoltammogramm des modifizierten Cantilevers zeigt bei einer Mediatorkonzentration 10 mM in 0,1 M Kaliumchlorid einen Leckstrom von < 1 pA (Fig. 5). Unter der Annahme, dass es sich um Pinholes in der Isolierung handelt, kann mit Hilfe der Theorie des stationären Grenzstroms ($I_{T\infty}$):

$$I_{T\infty} = 4nFcDr \hspace{4cm} \text{(Gleichung 2)}$$

mit: n: Anzahl der übertragenen Elektronen, F: Faraday-Konstante, D: Diffusionskoeffizient, c: Konzentration, r: Radius der Scheibenmikroelektrode

an einer Scheibenelektrode eine (elektro)aktive Fläche von < 0,01 $nm^2$ ermittelt werden.

Beispielhaft wird an Hand einer integrierten Ultramikroelektrode in einer nicht leitenden Rasternahfeldsonde mit einer .(elektro)-aktiven Dimension von 100 nm Durchmesser und einer Kantenlänge von 2 μm der theoretische Diffusionsgrenzstrom mit den experimentellen Daten verglichen. Mit Hilfe der Gleichung 1 kann der Diffusionsgrenzstrom einer Mikroringelektrode mit den geometrischen Faktoren der Elektrode korreliert werden, wenn a/b > 0,9 (vgl. W.R. Smythe, J. Appl. Phys., 22, 1499 (1951)):

$$I_d = nFDcl_o$$

$$I_o = \frac{\pi^2\,(a + b)}{\ln[16(a + b)/(b - a)]} \qquad \text{(Gleichung 3)}$$

mit: n: Anzahl der übertragenen Elektronen, F: Faraday-Konstante, D: Diffusionskoeffizient, c: Konzentration, I: geometrischer Faktor der Ringmikroelektrode, a: innerer Radius, b: äußerer Radius der Ringmikroelektrode.

Für Ringmikroelektroden mit einem beliebigen Verhältnis des inneren zum äußeren Radius der Elektrode kann der Parameter $I_o$ wie folgt beschrieben werden (vgl. A. Szabo, J. Phys. Chem., 91, 3108 (1987)):

$$I_o = \frac{\pi^2\,(a + b)}{\ln[32a/(b - a)+\exp(\pi^2/4]} \qquad \text{(Gleichung 4)}$$

Unter der Annahme, dass die theoretische Bestimmung des Diffusionsgrenzstromes für Ringmikroelektroden auch auf diese Geometrie angewendet werden kann, ergibt sich mit einem Diffusionskoeffizienten für Kaliumhexacyanoferrat(II) von $6,7 \cdot 10^{-6}$ cm$^2$/s für einen inneren Radius von 0,95 μm und einem äußeren Radius von 1,1 μm ein Diffusionsgrenzstrom von ~ 0,12 nA bei einer Konzentration des Redoxmediators von c = 5 mM. Wie aus Fig. 6 ersichtlich ist, stimmt der mit Hilfe der Abmessungen der Ringmikroelektrode errechnete Wert mit dem gemessenen Wert aus dem Zyklovoltammogramm hinreichend überein, wenn man z.B. Phänomene wie Oberflächenrauhigkeit und Kanteneffekte der Ultramikroelektrode mit in Betracht zieht. Da es sich im Gegensatz zum Ansatz von Macpherson et al. um eine planare Mikroelektrodengeometrie handelt, können mit Hilfe, wie z.B. der Elektronenmikroskopie, vergleichende Aussagen zu den Abmessungen der (elektro)aktiven Fläche getroffen werden.

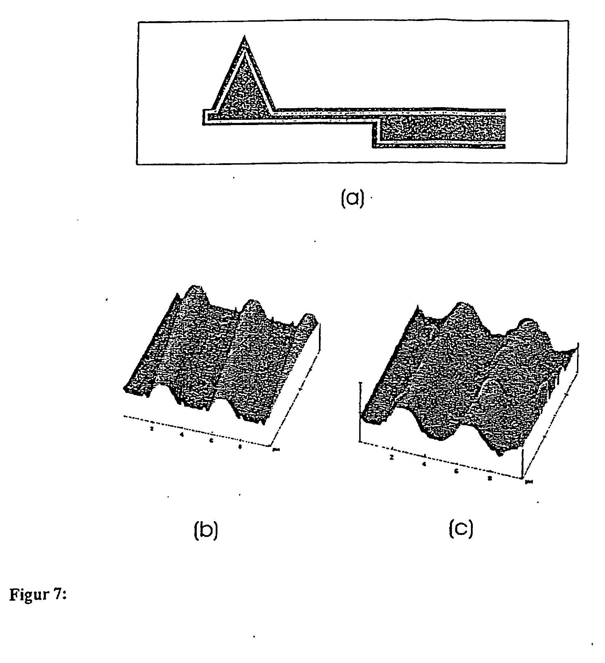

Voraussetzung für den Einsatz derartiger integrierter Ultramikroelektroden zur Charakterisierung von Oberflächen ist, dass die Modifikation der Rasternahfeldspitze zu keiner Beeinträchtigung der Detektion im Rahmen des physikalischen Messprinzips führt. Daher wurden beispielhaft mit modifizierten Sonden AFM-Messungen an Luft im Kontaktmodus durchgeführt. Als Proben wurden sowohl nahezu planare Strukturen selbstorganisierender Monoschichten auf p-dotierten Siliziumplättchen als auch dreidimensionale Halbleiterstrukturen untersucht. Ziel der Untersuchung war es, den Einfluss der Beschichtung auf das Ansprechverhalten des Cantilevers zu dokumentieren (Fig. 7). Durch das Aufbringen der leitenden und der isolierenden Schicht verändert sich aufgrund der Schichtdicken die Geometrie der topographischen Abbildungsspitze. Der ursprüngliche Krümmungsradius erhöht sich signifikant. Dies kann an Hand der Abbildung z.B. eines Gold-GaAS-Gitters mit einer Periodizität von 3,4 mm gezeigt werden. Da jedoch bei dem erfindungsgemäßen Verfahren die ursprüngliche Spitze zugefräst wird, stellt dies keine Limitierung des Verfahrens für die Abbildungsqualität der Rasternahfeldsonde mit integrierter Ultramikroelektrode dar.

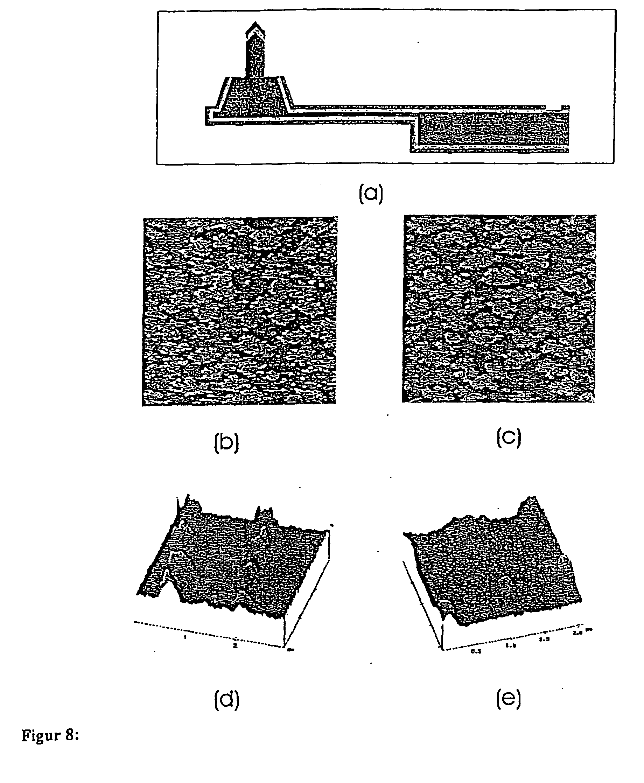

Die Stabilität der aufgebrachten Beschichtungen wurde an Hand von AFM-Messungen im Kontaktmodus getestet (Fig. 8). Diese Abbildung zeigt beispielhaft die Topographie von Polysiloxan-Inseln auf einer p-dotierten Siliziumoberfläche, die mit einer erfindungsgemäß hergestellten Sonde aufgezeichnet wurde. Die Messspitze hatte eine Höhe von 2 μm und einen Krümmungsradius von 300 nm. Dies ist im Vergleich mit einer nicht modifizierten AFM-Spitze erkennbar.

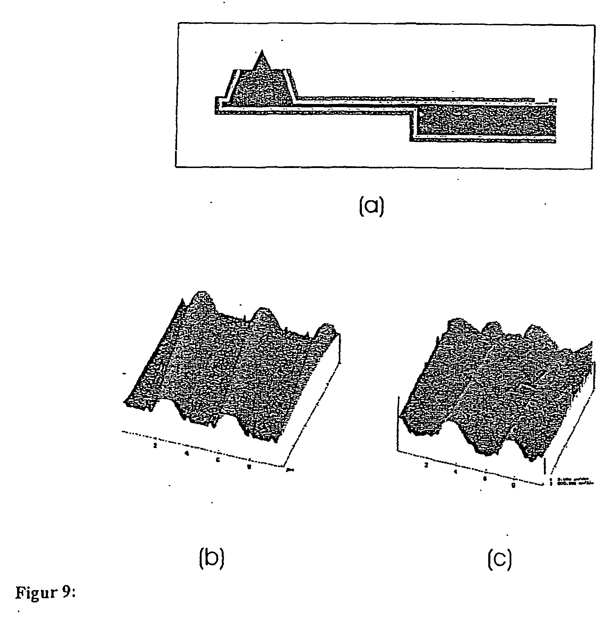

Die Stabilität der erfindungsgemäßen Ultramikroelektrode wurde ebenfalls an Hand eines Gold-GaAS-Gitters mit einer Periodizität von 3,4 μm gezeigt (Fig. 9).

Der Einsatz von Kraftwechselwirkungen zwischen Nahfeldsonde und mechanisch instabilen Proben, wie z. B. bei der Untersuchung von biologischen Systemen, muss ein dynamischer Modus für die Erfassung der Topographie der Probe gewählt werden. Im Tapping Mode (dynamic mode, intermittent contact mode) wird der Cantilever mit hoher Frequenz - in Lösung im Bereich von 20 - 40 KHz - zur Schwingung nahe der Resonanzfrequenz angeregt und berührt die Probe nur noch am Punkt der maximalen Schwingungsamplitude. In erster Näherung kann der schwingende Cantilever als harmonischer Oszillator beschrieben werden. Die Modulation der Rasternahfeldsonde erzeugt eine Modulation des elektrochemischen Messsignals mit der gleichen Frequenz. Durch geeignete Datenerfassung und Verarbeitung des elektrochemischen Messsignals kann der Beitrag, der durch die Schwingung der Rasternahfeldsonde erzeugt wird, herausgemittelt werden.

Die Messspitze (i) die zur Aufnahme der Oberflächentopographie dient besteht bei der erfindungsgemäßen Messspitze aus $Si_3N_4$, kann aber mit dem vorliegenden Verfahren aus jedem Material hergestellt werden. Höhe und Form der Messspitze kann variiert werden. Typische Abmessungen ohne Einschränkung der Allgemeinheit sind eine Höhe von 0,2 μm bei einem Krümmungsradius der Spitzen von < 30nm.

Die Geometrie der Ultramikroelektrode kann in Form und Größe kontrolliert variiert werden. Der Abstand der Elektrode zur Probenoberfläche wird durch die Höhe der oben beschriebenen Messspitze (i) eingestellt.

Eine isolierende Deckschicht (iii), z.B. Siliziumnitrid, überzieht die gesamte Sonde mit Ausnahme der Ultramikroelektrode, des Anschlussgebietes und der Messspitze und ist bei der erfindungsgemäßen Messspitze z.B. eine 900nm dicke Nitridschicht, die vorzugsweise mittels CVD aufgebracht wird. Es ist aber auch jede andere Isolationsschicht möglich, die den Ansprüchen an Isolation, Flexibilität und Beständigkeit gegenüber den bei der Messung eingesetzten Medien genügt. Diese Isolationsschicht muss ausreichend dick sein, um die Isolation zu garantieren und dünn genug, um die dynamischen Eigenschaften der Messspitze nicht einzuschränken.

Die Größe und Geometrie (kreisrunde-, elliptische-, rechteckige und auch unregelmäßige Elektrodenflächen) der elektrisch aktiven Fläche der Ultramikroelektrode kann in kontrollierter Weise hergestellt und variiert werden, wie auch der Abstand der Ultramikroelektrode zur Oberfläche und das Verhältnis dieses Abstandes zur elektrisch aktiven Fläche der Ultramikroelektrode.

Die Elektrodenummantelung (die Isolierschicht) ist elektrisch isolierend und gegen die bei Messungen in flüssigen Medien eingesetzten Lösungen chemisch inert.

Die Sonde lässt sich in vorteilhafter Weise mit einem erfindungsgemäßen Verfahren herstellen, wie es im Folgenden näher beschrieben wird. Das in den beigefügten Prinzipskizzen (Figur 11 bis 14) dargestellte Herstellungsverfahren umfasst im wesentlichen folgende Schritte:

Der erfindungsgemäßen Vorrichtung (Sonde) mit integrierter Ultramikroelektrode liegt im Ausführungsbeispiel ein Grundkörper zunächst in Form eines $Si_3N_4$-Cantilevers (Figur 11 (1)) vor. Auf diesen wird eine leitende Schicht aufgebracht, im Ausführungsbeispiel werden 200 nm Gold aufgesputtert. Die elektrisch leitende Schicht wird mit einer isolierenden Schicht überzogen, die gegenüber den bei Messungen in flüssigen Medien eingesetzten Lösungen beständig sein muss (Figur 11 (3)). Bei der erfindungsgemäßen Messspitze wurde z.B. mit einem plasmaunterstützten CVD-Prozess eine 900 nm dicke Siliziumnitridschicht abgeschieden.

Im nächsten Schritt wird mit einem materialabtragenden Verfahren, vorzugsweise mit einer "focused ion beam"-Anlage, wie in Figur 12 dargestellt, lokal (strichlierte Bereiche in Figur 12) die äußere Isolationsschicht über der Elektrode und ein Teil der Elektrode und des Grundkörpers entfernt. Dieser Prozeß wird einmal von der Seitenfläche her (Figur 12a) und einmal 90° dazu versetzt von der Stirnfläche her (Figur 12b) durchgeführt.

Aus dem verbliebenen Quader mit aufgesetzter Pyramide mit der Materialabfolge Isolator-Metall-Isolator wird vorzugsweise mit der "focused ion beam"-Anlage durch Abtragen der in Figur 13 strichliert eingezeichneten Bereiche wiederum wie im vorigen Prozeßschritt jeweils einmal von der Seiten- und Stirnfläche her eine neue Messspitze geformt.

Erfindungsgemäß kann die Messspitze durch geeignete Wahl des Materialabtrages aus dem Material des Grundkörpers (Figur 13 a) der leitenden Schicht (Figur 13 b) oder der Isolationsschicht über dem Metall (Figur 13 c) geformt werden. Die Abbildungen d, e und f in Figur 13 zeigen die sich dabei ergebenden Spitzenkonfigurationen.

Die Höhe der Spitze, der Spitzenradius und die Form der Spitze können durch geeignet gewählten Materialabtrag ebenfalls variiert werden. Die Messspitze besteht beim Ausführungsbeispiel aus dem Material des eingesetzten Cantilevers.

Abschließend werden die Elektrodenflächen im Ausführungsbeispiel durch eine spezielle Form des Materialabtrages mit der FIB (single pass mill) von redeponiertem Material gereinigt. Bei diesem single pass mill rastert der materialabtragende Ionenstrahl nur einmal die in Figur 14 strichliert eingezeichneten Bereiche von oben nach unten ab, sodass zuletzt nur einmal die Probenoberfläche vom Ionenstrahl abgesputtert und damit redeponiertes Material entfernt wird.

Es kann aber jedes andere Verfahren, dass strukturerhaltend die Oberfläche reinigt, wie z.B. ein Ätzprozess, zur Reinigung der Elektrodenflächen eingesetzt werden.

Die Kontaktierung der Ultramikroelektrode kann an jedem beliebigen Punkt erfolgen, indem durch ein strukturgebendes Verfahren die oberste Isolationsschicht lokal entfernt und ein entsprechender Anschlusskontakt zur leitenden Schicht freigelegt wird.

In obigem Ausführungsbeispiel erfolgt die Kontaktierung der Ultramikroelektrode am hinteren Ende des Glaskörpers des Cantilevers (Figur 10).

Aus dem erfindungsgemäßen Verfahren ergeben sich z.B. folgende Möglichkeiten, die Elektrodenfläche oder Geometrie bzw. das Verhältnis von Elektrodenfläche zum Abstand der Elektrode von der Probenoberfläche und den lateralen Abstand der Elektrode von der Messspitze zu variieren:

1. Durch Aufbringen unterschiedlich dicker elektrisch leitender Schichten kann die elektrisch aktive Fläche der Sonde unabhängig von der in Figur 12 eingezeichneten Sockelhöhe variiert werden.

2. Bei einer festgelegten Dicke der elektrisch leitenden Schicht kann, wie im Fall des Ausführungsbeispieles, bei einem pyramidenförmigen Grundkörper für größere Sockelhöhen (Figur 12) die Elektrodenflächen verkleinert werden.

3. Die Geometrie der Elektrode lässt sich durch Wahl des Grundkörpers, auf dem die elektrisch leitende Schicht aufgebracht wird, variieren. Im Ausführungsbeispiel wurde ein Cantilever verwendet, bei dessen pyramidenförmigen Spitze sich eine - wie aus Figur 10 ersichtlich - quadratische Rahmenelektrode ergibt. Erfindungsgemäß kann aber jeder beliebig geformte Grundkörper als Ausgangsmaterial eingesetzt werden und damit z.B. kreisrunde, elliptische, rechteckige oder vieleckige Elektroden realisieren. Mit der im Ausführungsbeispiel eingesetzten focused ion beam-Anlage kann ebenso wie mit jedem geeigneten strukturgebenden Verfahren jede beliebige auch unregelmäßige Form des Grundkörpers vorgegeben werden, wodurch sich nicht geschlossene, insbesondere auch segmentierte Ultramikroelektroden, realisieren lassen.

4. Das Verhältnis Elektrodenfläche/Abstand der Elektrode zur Probenoberfläche lässt sich durch die Einstellung der Höhe der Messspitze variieren.

5. Der laterale Abstand der Mikroelektrode von der Messspitze zur Bestimmung der Oberflächentopologie kann wie im Ausführungsbeispiel bei entsprechend geformten Grundkörper durch die Sockelhöhe (Figur 12) festgelegt werden.

Das erfindungsgemäße Verfahren ist hinsichtlich der Anzahl der Schichten und der Schichtabfolge in keinster Weise eingeschränkt. Durch alternierendes Beschichten des isolierenden Grundkörpers mit leitenden und isolierenden Schichten und, analog zum Ausführungsbeispiel, anschließendes lokales Abtragen des Materials, können damit auch Multielektroden hergestellt werden. Die Abstände der einzelnen Elektroden zur Probenoberfläche können dabei unterschiedlich sein. Figur 15 zeigt exemplarisch ein Ausführungsbeispiel für eine Doppelelektrode. Für eine erfindungsgemäße Sonde mit mehreren integrierten Elektroden gilt sinngemäß das beschriebene Verfahren mit der Modifikation, dass der materialabtragende Schritt zweimal mit unterschiedlicher Sockelhöhe durchgeführt werden kann (Figur 15). Das Herstellen der eigentlichen Messspitze und das Entfernen von redeponiertem Material von der Elektrode wird analog zum oben beschriebenen Ausführungsbeispiel durchgeführt.

Wird als Grundkörper ein elektrisch leitendes Material eingesetzt, erhält man durch eine Reihe von strukturgebenden Abscheide- und Ätzschritten eine Doppelelektrode, wobei die Messspitze nun selbst elektrisch leitend ist (Figur 16).

Hierbei können beliebige Mehrschichtsysteme aufgebaut und damit Multielektroden realisiert werden.

Als Grundkörper der Sonde ist jedes Material einsetzbar, insbesondere auch Lichtleiter und allgemein Wellenleiter für elektromagnetische Wellen. In diesem Fall kann z.B.ein Lichtstrahl (allgem. elektromagnetische Wellen) bis zur Sondenspitze geführt und auf die Probe geleitet werden. Ferner kann auch eine äußere Mantelschicht in diesem Sinne als Wellenleiter oder Lichtleiter verwendet werden.

Eine weitere Ausführungsform für die Messmethodik ist durch die Kombination mehrerer Messsonden möglich. Dies kann in Form von mehreren parallel auf einem Grundkörper angeordneten Einzelspitzen (Fig.17) oder in Form eines Spitzenarrays realisiert werden (Fig.18).

Dabei analysiert eine Vielzahl von Messsonden parallel Einzelbereiche der Probe aus denen mit Hilfe eines Datenverarbeitungsprogrammes das Gesamtbild der Probenoberfläche erstellt werden kann. Dies führt abhängig von der Anzahl der eingesetzten Messsonden zu einer Verkürzung der Messdauer. Eine weitere Variante ist der gleichzeitige Einsatz von Messsonden unterschiedlichen Typs. Es könnten beispielsweise Ultramikroelektroden mit unterschiedlichen Elektrodenflächen oder Elektrodenformen oder auch Elektroden aus unterschiedlichen Materialien oder Multielektroden gleichzeitig eingesetzt werden. Darüber hinaus ist auch die Kombination von Messspitzen die als Mikrobiosensor, pH-sensitive oder potentiometrische Ultramikroelektrode, oder ionensensitive oder -selektive Ultramikroelektroden oder jede andere Nahfeldmikroskopische Analysemethode miteinander kombiniert werden. Bei der Signalabnahme im Falle einer Kombination von Messsonden wie in Fig.17 dargestellt ist darauf zu achten, dass diese entkoppelt voneinander geführt werden. Die Abnahme des Messsignals jeder Einzelspitze eines Multielektrodenarrays kann z.B. über elektrische Leitungen erfolgen, die an den Stegen des Arrays geführt werden.

In Fig.17 bezeichnet (1) den Grundkörper mit drei integrierten Ultramikroelektroden, (2) die Kontaktflächen zur Signalabnahme und (3) die elektrische Trennfuge. In Fig.18 bezeichnet (1) einen Ultramikroelektrodenarray, (2) einzelne Multielektrode (können von unterschiedlichem Typ sein) und (3) die Stege des Multielektrodenarrays.

In Fig.19 ist eine schematische Darstellung einzelner und multipler integrierter Rahmen/Ring Mikro/Nanoelektroden dargestellt: (a) schematische Schnittdarstellung eines AFM Cantilevers nach Integration der Elektrode und Bearbeitung der AFM-Spitze; (b) integrierte Rahmen Mikro/Nanoelektrode; (c) integrierte Ring Mikro/Nanoelektrode; (d) multiple integrierte Rahmen Mikro/Nanoelektroden; (e) multiple integrierte Ring Mikro/Nanoelektroden. In Fig. 19 bezeichnen (1) eine integrierte Rahmen/Ring Mikro/Nanoelektrode, (2) bearbeitete AFM-Spitze, (3) elektrischer Kontakt zur Signalabnahme, (4) leitende Schicht (z.B. Gold), (5) elektrisch isolierende Schicht, (6) ursprünglicher, unbehandelter AFM Cantilever und (7) multiple integrierte Rahmen/Ring Mikro/Nanoelektroden.

**Beispiel 2: Kombinierte AFM-SECM Messung mit der erfindungsgemäßen Messanordnung**

Die erfindungsgemäße kombinierte Messspitze wurde in ein Rasterkraftmikroskop der Firma Digital (Nanoscope III) eingebaut. Es wurden beispielhaft Goldstege auf einem Galliumarsenid-Wafer untersucht. Die Goldstege haben eine Periodizität von 4.3 µm und eine Höhe von 0.2 µm. Die Messung wurde in 0.5 mol 1-1 Kcl mit einem Anteil von 0.01 mol 1-1 $[Fe(CN)_6]^{4-}$ durchgeführt. Die in diesem Beispiel angewandte integrierte Ring Goldelektrode hatte einen Innendurchmesser von 900 nm. Die geformte AFM-Spitze wurde mit einer Länge von 1.5 µm gefertigt.

Messparameter: Abbildungsfläche 20 µm x 20 µm; Scanrate: 2 Hz; die erfindungsgemäße kombinierte Messspitze wurde von links nach rechts und oben nach unten gescannt. Das Ergebnis ist in Fig.20 wiedergegeben: (links) Topographische Abbildung der Oberfläche mit der AFM-Spitze. (rechts) Simultan erfasste elektrochemische Abbildung mit der integrierten Elektrode. An die Elektrode war ein konstantes Potential von + 0.6 V (gegen eine AgQRE (Silber Quasi-Referenzelektrode)) angelegt.

## Patentansprüche

1. Vorrichtung für die gleichzeitige Durchführung einer elektrochemischen und einer topographischen Nahfeldmikroskopie, welche Vorrichtung einen Bereich zur topographischen Nahfeldmessung und einen Bereich zur elektrochemischen Nahfeldmessung umfasst und sich der Bereich zur topographischen Nahfeldmessung vollständig bis zur unmittelbaren Spitze der Vorrichtung erstreckt, **dadurch gekennzeichnet, dass** der Bereich zur elektrochemischen Nahfeldmessung in einem definierten Abstand von der unmittelbaren Spitze beginnt, der Bereich zur topographischen Nahfeldmessung mit Ausnahme der unmittelbaren Spitze mit einem leitenden Material bedeckt ist, welches leitende Material mit Ausnahme des Bereiches zur elektrochemischen Nahfeldmessung von einem isolierenden Material bedeckt ist.

2. Vorrichtung nach Anspruch 1, **dadurch gekennzeichnet, dass** sie aus einer Rasternahfeld-Spitze besteht, die mit Ausnahme der unmittelbaren Spitze von einem leitenden Material umhüllt ist, welches leitende Material mit Ausnahme des Bereiches zur elektrochemischen Nahfeldmessung von einem isolierenden Material bedeckt ist.

3. Vorrichtung nach Anspruch 1 oder 2, **dadurch gekennzeichnet, dass** der Bereich zur elektrochemischen Nahfeldmessung eine Dicke von 10 bis 2000 nm, vorzugsweise 100 bis 800 nm, insbesondere 150 bis 500 nm aufweist.

4. Vorrichtung nach einem der Ansprüche 1 bis 3, **dadurch gekennzeichnet, dass** der Bereich zur elektrochemischen Nahfeldmessung aus Metall oder Metalllegierungen, insbesondere Gold, Silber, Platin, Palladium, Wolfram, Antimon, Rhodium, Iridium, Quecksilber-Legierungen, Platin-Iridium-Legierung, Platin-Rhodium-Legierung, Kohlenstoff, Glaskohlenstoff, hochgeordneter pyrolytischer Graphit (HOPG), Polysilizium, insbesondere dotiertes Polysilizium, Metallnitride, insbesondere TiN oder TaN oder Silizide, insbesondere Wolframsilizid oder Tantalsilizid, besteht.

5. Vorrichtung nach einem der Ansprüche 1 bis 4, **dadurch gekennzeichnet, dass** sie als Mikrobiosensor, wie z.B. mit Enzymelektrode, pH-sensitive Ultramikroelektrode, potentiometrische Ultramikroelektrode, ionensensitive Ultramikroelektrode, ionenselektive Ultramikroelektrode, potentiometrische oder amperometrische Ultramikroelektrode oder biomimetische Ultramikroelektrode, ausgebildet ist.

6. Vorrichtung nach einem der Ansprüche 1 bis 5, **dadurch gekennzeichnet, dass** sie mit Multielektroden- und/oder Multisensoren konfigurierten Elektroden ausgebildet ist, wobei vorzugsweise für unterschiedliche Messmethoden ausgerichtete Messsonden vorgesehen sind.

7. Vorrichtung nach einem der Ansprüche 1 bis 6, **dadurch gekennzeichnet, dass** der definierte Abstand des Bereiches zur Nahfeldmessung von der unmittelbaren Spitze 2 µm bis 30 nm, vorzugsweise 1 µm bis 50 nm, insbesondere 0,5 µm bis 100 nm beträgt.

8. Verfahren zur ultramikroskopischen Untersuchung von Oberflächen, wobei eine Vorrichtung nach einem der Ansprüche 1 bis 7 durch an sich bekannte Mittel in die Nähe der zu untersuchenden Oberfläche gebracht wird, so dass sowohl der Abstand zur Oberfläche durch eine topographische Nahfeldtechnik gemessen werden kann als auch eine elektrochemische Nahfeldmessung der Oberfläche durchgeführt werden kann und die Oberfläche durch Bewegung der Vorrichtung über die Oberfläche untersucht wird, wobei die durch die topographische Nahfeldtechnik erhaltene Information unmittelbar dazu verwendet wird, die Vorrichtung in etwa gleichem Abstand zur Oberfläche zu halten, so dass die elektrochemische Nahfeldmessung ohne Beeinträchtigung durch topologische Schwankungen durchgeführt werden kann.

9.  Nahfeld-Mikroskop zur ultramikroskopischen Untersuchung von Oberflächen, umfassend

    -   eine Vorrichtung nach einem der Ansprüche 1 bis 7,
    -   eine Analyseeinheit, in der die an der Vorrichtung gemachten Messungen erfasst und verarbeitet werden,
    -   Mittel zur Übertragung der elektrochemischen Nahfeldmessung von der Vorrichtung zur Analyseeinheit,
    -   Mittel zur Übertragung der topologischen Nahfeldmessung von der Spitze der Vorrichtung zur Analyseeinheit und
    -   Manipulationselemente für die Vorrichtung, die durch die Analyseeinheit steuerbar sind.

10. Nahfeld-Mikroskop nach Anspruch 9, die ein Kraftmikroskop umfasst.


**Claims**

1.  A device for simultaneously carrying out an electrochemical and a topographical near field microscopy, which device comprises a region for topographical near field measurement and a region for electrochemical near field measurement, with the region for topographical near field measurement extending completely as far as to the immediate tip of the device, **characterized in that** the region for electrochemical near field measurement starts at a defined distance from the immediate tip, the region for topographical near field measurement is covered by a conductive material except for the immediate tip, which conductive material is covered by an insulating material except for the region for the electrochemical near field measurement.

2.  A device according to claim 1, **characterized in that** it comprises a scanning near field tip, which device, except for the immediate tip, is enveloped by a conductive material, which conductive material, with the exception of the region for electrochemical near field measurement, is covered by an insulating material.

3.  A device according to claim 1 or 2, **characterized in that** the region for electrochemical near field measurement has a thickness of from 10 to 2000 nm, preferably 100 to 800 nm, in particular 150 to 500 nm.

4.  A device according to any one of claims 1 to 3, **characterized in that** the region for electrochemical near field measurement consists of metal or metal alloys, in particular gold, silver, platinum, palladium, tungsten, antimony, rhodium, iridium, mercury alloys, a platinum-iridium-alloy, a platinum-rhodium-alloy, carbon, glassy carbon, high-order pyrolytic graphite (HOPG), polysilicon, in particular doped polysilicon, metal nitrides, in particular TiN or TaN, or silicides, in particular tungsten silicide or tantalum silicide.

5.  A device according to any one of claims 1 to 4, **characterized in that** it is designed as a microbiosensor, such as, e.g., with an enzyme electrode, a pH-sensitive ultramicroelectrode, a potentiometric ultramicroelectrode, an ion-sensitive ultramicroelectrode, an ion-selective ultramicroelectrode, a potentiometric or amperometric ultramicroelectrode or a biomimetic ultramicroelectrode.

6.  A device according to any one of claims 1 to 5, **characterized in that** it is designed with electrodes configured as multielectrodes and/or multisensors, wherein preferably measurement probes adapted for different measurement methods are provided.

7.  A device according to any one of claims 1 to 6, **characterized in that** the defined distance of the region for near field measurement from the immediate tip is 2 µm to 30 nm, preferably 1 µm to 50 nm, in particular 0.5 µm to 100 nm.

8.  A method for the ultramicroscopic examination of surfaces, wherein a device according to any one of claims 1 to 7, by means known *per se,* is brought into the vicinity of the surface to be examined so that both the distance to the surface can be measured by a topographical near field technique and also an electrochemical near field measurement of the surface can be carried out, and the surface is examined by moving the device over the surface, with the information obtained by the topographical near field technique immediately being used to keep the device approximately at the same distance to the surface so that the electrochemical near field measurement can be carried out without being impaired by topological fluctuations.

9.  A near field microscope for ultramicroscopic examination of surfaces, comprising

    ·   a device according to any one of claims 1 to 7,

- an analysis unit in which the measurements made by the device are recorded and processed,
- means for transferring the electrochemical near field measurement from the device to the analysis unit,
- means for transferring the topological near field measurement from the tip of the device to the analysis unit, and
- manipulating elements for the device that are controllable by the analysis unit.

**10.** A near field microscope according to claim 9 which comprises a force microscope.

**Revendications**

**1.** Dispositif de réalisation simultanée d'une microscopie de champ proche électrochimique et topographique, lequel dispositif comprend une zone pour la mesure du champ proche topographique et une zone pour la mesure du champ proche électrochimique et la zone pour la mesure du champ proche topographique s'étend entièrement jusqu'à la pointe directe du dispositif, **caractérisé en ce que** la zone pour la mesure du champ proche électrochimique commence à un intervalle défini de la pointe directe, la zone pour la mesure du champ proche topographique est recouverte, à l'exception de la pointe directe, d'un matériau conducteur, lequel matériau conducteur est recouvert, à l'exception de la zone pour la mesure du champ proche électrochimique, d'un matériau isolant.

**2.** Dispositif selon la revendication 1, **caractérisé en ce qu'**il se compose d'une pointe de champ proche de balayage qui est entourée, à l'exception de la pointe directe, d'un matériau conducteur, lequel matériau conducteur est recouvert, à l'exception de la zone pour la mesure du champ proche électrochimique, d'un matériau isolant.

**3.** Dispositif selon la revendication 1 ou 2, **caractérisé en ce que** la zone pour la mesure du champ proche électrochimique présente une épaisseur de 10 à 2000 nm, de préférence 100 à 800 nm, en particulier 150 à 500 nm.

**4.** Dispositif selon l'une des revendications 1 à 3, **caractérisé en ce que** la zone pour la mesure du champ proche électrochimique est composée de métal ou d'alliages métalliques, notamment l'or, l'argent, le platine, le palladium, le tungstène, l'antimoine, le rhodium, l'iridium, des alliages de mercure, un alliage de platine / iridium, un alliage de platine / rhodium, le carbone, le carbone de verre, le graphite hautement orienté (HOPG), le polysilicium, notamment le polysilicium dopé, un nitrure de métal, notamment TiN ou TaN ou les siliciures, notamment les siliciures de tungstène ou les siliciures de tantale.

**5.** Dispositif selon l'une des revendications 1 à 4, **caractérisé en ce qu'**il est conçu en tant que microbiocapteur, comme par exemple avec une électrode enzymatique, une ultramicroélectrode sensible au pH, une ultramicroélectrode potentiométrique, une ultramicroélectrode sensible aux ions, une ultramicroélectrode sélective d'ions, une ultramicroélectrode potentiométrique ou ampérométrique, ou bien une ultramicroélectrode biomimétique.

**6.** Dispositif selon l'une des caractéristiques 1 à 5, **caractérisé en ce qu'**il est conçu au moyen d'électrodes configurées comme des capteurs multiples et / ou multiélectrodes, des sondes de mesure de préférence adaptées à différentes méthodes de mesure étant prévues.

**7.** Dispositif selon l'une des revendications 1 à 6, **caractérisé en ce que** l'intervalle défini de la zone pour la mesure du champ proche de la pointe directe est de 2 µm à 30 nm, de préférence 1 µm à 50 nm, en particulier 0,5 µm à 100 nm.

**8.** Procédé d'analyse ultramicroscopique de surfaces, un dispositif selon l'une des revendications 1 à 7 étant amené, par l'intermédiaire d'un moyen connu en soi, à proximité de la surface à analyser, de telle manière qu'il est possible aussi bien de mesurer l'intervalle jusqu'à la surface par l'intermédiaire d'une technique de champ proche topographique, que d'effectuer une mesure du champ proche électrochimique de la surface et que la surface est analysée via le mouvement du dispositif au-dessus de la surface, les informations obtenues par le biais de la technique du champ proche topographique étant directement utilisées pour maintenir le dispositif à un intervalle à peu près similaire de la surface, de telle sorte que la mesure du champ proche électrochimique peut être réalisée sans perturbations dues à des oscillations topologiques.

**9.** Microscope de champ proche pour l'analyse ultramicroscopique de surfaces, comprenant

- un dispositif selon l'une des revendications 1 à 7,
- une unité d'analyse, dans laquelle les mesures réalisées au niveau du dispositif sont saisies et traitées,

- un moyen de transmission de la mesure du champ proche électrochimique du dispositif à l'unité d'analyse,
- un moyen de transmission de la mesure du champ proche topologique de la pointe du dispositif à l'unité d'analyse et
- des éléments de manipulation pour le dispositif, qui peuvent être commandés par l'unité d'analyse.

**10.** Microscope de champ proche selon la revendication 9, qui comporte un microscope de force.

FIGUR 1

FIGUR 2

FIGUR 3

geteilte
Photodiode

Spiegel

Laser

Topographische
Information

Quasi-Referenzelektrode

Modifizierte AFM-Spitze

Potentiostat

Feedback
Controller

z-Signal

Piezo
Scanner

Probe

Elekrochem.
Bild

Hohen
Bild

xy-Driver

Figur 4:

Figur 5:

Figur 6:

(a)

(b)

(c)

Figur 7:

(a)

(b)                    (c)

(d)                    (e)

Figur 8:

(a)

(b)

(c)

Figur 9:

EP 1 290 404 B1

1

2

3

4

4

4

a)

b)

Figur 10

Figur 11

Sockelhöhe

a)                                              b)

Figur 12

EP 1 290 404 B1

Figur 13:

Figur 14:

Figur 15

32

elektrisch leitende Schicht

isolierende Schicht

Figur 16

Figur 17

Figur 18

**Figur 19**

Figur 20